# EUROPEAN PATENT SPECIFICATION

(11) **EP 4 266 162 B1**
(45) Date of publication and mention of the grant of the patent: **30.09.2026**
(21) Application number: 23706273.2
(22) Date of filing: 07.02.2023
(51) Int. Cl.: G06F 3/042, G06F 3/00, H04N 25/00, G01S 17/08, G06F 1/16, G06F 1/3234, G06F 3/01, H04N 23/71, G06F 1/3231

(54) **METHOD FOR UTILIZING PROXIMITY SENSOR COMPRISING PLURALITY OF LIGHT RECEPTION MODULES, AND ELECTRONIC DEVICE**
VERFAHREN ZUR VERWENDUNG EINES NÄHERUNGSSENSORS MIT MEHREREN LICHTEMPFANGSMODULEN UND ELEKTRONISCHE VORRICHTUNG
PROCÉDÉ PERMETTANT D'UTILISER UN CAPTEUR DE PROXIMITÉ COMPRENANT UNE PLURALITÉ DE MODULES DE RÉCEPTION DE LUMIÈRE, ET DISPOSITIF ÉLECTRONIQUE

(30) Priority: 14.02.2022 KR 20220018585; 27.04.2022 KR 20220052180
(43) Date of publication of application: 25.10.2023
(73) Proprietor: Samsung Electronics Co., Ltd., Suwon-si, Gyeonggi-do 16677 (KR)
(72) Inventor: KIM, Jongah, Suwon-si, Gyeonggi-do 16677 (KR); YOON, Heewoong, Suwon-si, Gyeonggi-do 16677 (KR); LEE, Kihyuk, Suwon-si, Gyeonggi-do 16677 (KR); LEE, Donghan, Suwon-si, Gyeonggi-do 16677 (KR); CHOI, Gwangho, Suwon-si, Gyeonggi-do 16677 (KR)
(74) Representative: HGF
(86) International application number: PCT/KR2023/001707
(87) International publication number: WO 2023/153760

(56) References cited:
- EP-A1- 3 352 061
- JP-A- 2010 075 615
- JP-A- 2010 107 448
- JP-A- 2016 174 685
- KR-A- 20180 032 947
- US-A1- 2018 023 274
- US-A1- 2018 087 890
- US-A1- 2020 218 881

## Description

### [Technical Field]

Various embodiments of the disclosure relate to a method and an electronic device using a proximity sensor including multiple light receiver modules.

### [Background Art]

An electronic device may include a large-screen touch display for securing wide visibility and improved convenient operation. An electronic device, as an optical module, may include at least one sensor module disposed under a display in an internal space. At least one sensor module is a sensor that uses light (e.g., beam) and may include a light emitting module and a light receiver module. For example, a sensor module may include at least one of a proximity sensor, a UV sensor, an iris sensor, a camera module (e.g., an under display camera (UDC)), an RGB sensor, and/or an illumination sensor. An electronic device may identify whether an object is close to a display by using a sensor module disposed below the display.
EP3352061 A1 discloses, according to its abstract, a method of controlling display screen statuses and an apparatus, the method including following actions. A signal emitter emits a detection signal outward. A second signal receiver receives a reflection signal of the detection signal formed by an external object. Based on intensity of the reflection signal received by the second signal receiver, distance states between terminals and the object are determined. The method controls the display screen statuses based on the distance states. Since the signal receiver away from the signal emitter precisely detects the distance states between terminals and the object, the method controls the display screen statuses of the terminals.
US 2018/023274 A1 discloses, according to its abstract, electronic plumbing fixture fittings, such as electronic faucets, with a shaped and limited sensor detection zone. Examples include devices with a plurality of overlapping sensors and devices with a single time-of-flight (TOF) sensor capable of detecting the presence or absence of an object whether or not water is flowing out of a discharge outlet in the in a TOF detection zone.
US 2018/087890 A1 discloses, according to its abstract, an apparatus and a method for controlling an optical sensor in an electronic device. The electronic device includes: a light emission element configured to emit light; a first light reception element configured to detect an intensity of light which is reflected from an object based on the light emitted by the light emission element; a second light reception element configured to detect a shape of the object using the light which is reflected from the object based on the light emitted by the light emission element; and a processor. The processor is configured to: control the light emission element to emit light with an intensity corresponding to an operation mode of the electronic device; and receive light which is reflected from the object via the first light reception element or the second light reception element based on the operation mode of the electronic device.

### [Disclosure of Invention]

### [Technical Problem]

The sensor module mounted in an electronic device includes a light emitting module and a light receiver module, and each of the light emitting module and the light receiver module may have a preset orientation angle (e.g., an orientation view; e.g., for the light emitting module, this may be an angle (from the light emitting module) within which light is emitted, and for the light receiver module this may be an angle (from the light receiver module) within which light may be received). For example, light (e.g., a beam of light) emitted through a light emitting module may be reflected by an object (e.g., a human body or a part thereof, and/or a thing), and the reflected light may be received through a light receiver module. The electronic device may determine a proximity to an object based on the amount of light received through the light receiver module of a sensor module. Each of the light emitting module and the light receiver module is configured to have a specific orientation angle. Based on the orientation angle of the light emitting module and the orientation angle of the light receiver module, there exists a distance (e.g., from the object to the light emitting module, or to the light receiving module, or to the electronic device etc.) within which it is difficult to accurately identify the distance to the object (e.g., this distance may be interchangeable referred to as: an unidentified distance, an uncertainty distance, an unidentified area, an uncertainty area, an unidentified, an uncertainty range, a gray area, and/or a gray zone). In the case that an object is located within this uncertainty distance (to use one of the terms indicated above, without limitation), the electronic device may have difficulty in identifying the location of the object.

According to various embodiments of the disclosure, there is provided a method for accurately identifying the location of an object using a sensor module (e.g., a light emitting module, a light receiver module) in an electronic device even in the case that the object is close to the electronic device within an uncertainty distance.

However, the objects/aims to be achieved by certain embodiments of the disclosure are not limited to the above, and may be expanded in various ways without departing from the scope of the disclosure.

### [Solution to Problem]

The scope of the present invention is determined according to the independent claims. Various embodiments of the present invention are outlined in the dependent claims.

Also disclosed herein is an electronic device including a light emitting module, a first light receiver module disposed apart from the light emitting module by a first distance, a second light receiver module disposed apart from the light emitting module by a second distance different from the first distance, a memory, and a processor operatively connected to the light emitting module, the first light receiver module, the second light receiver module, and the memory. The processor may emit light to an external environment through the light emitting module, identify a first light reception amount of light obtained through the first light receiver module based on the light emitted, identify a second light reception amount of light obtained through the second light receiver module based on the light emitted, and determine a proximity of an object to the electronic device based on the first light reception amount and the second light reception amount.

Also disclosed herein is an electronic device including a light emitting module, a first light receiver module disposed apart from the light emitting module by a first distance and configured to have a first orientation angle, a second light receiver module disposed apart from the light emitting module by the first distance and configured to have a second orientation angle different from the first orientation angle, a memory, and a processor operatively connected to the light emitting module, the first light receiver module, the second light receiver module, and the memory. The processor may emit light to an external environment through the light emitting module, identify a first light reception amount of light obtained through the first light receiver module based on the light emitted, identify a second light reception amount of light obtained through the second light receiver module based on the light emitted, and determine a proximity of an object to an electronic device based on the first light reception amount and the second light reception amount.

Also disclosed herein is a method of using a proximity sensor comprising a plurality of light receiver modules, including an operation of emitting light to an external environment through a light emitting module, an operation of identifying a first light reception amount of light obtained through a first light receiver module based on the light emitted, an operation of identifying a second light reception amount of light obtained through a second light receiver module based on the light emitted, and an operation of determining a proximity of an object to an electronic device based on the first light reception amount and the second light reception amount. The first light receiver module may be disposed apart from the light emitting module by a first distance, and the second light receiver module may be disposed apart from the light emitting module by a second distance different from the first distance.

### [Advantageous Effects of Invention]

According to various embodiments of the disclosure, the electronic device may use a sensor module using light (e.g., a beam of light) to determine a proximity of an object (e.g., a distance to the object, a closeness of the object, a position of the object etc.) with respect to the electronic device. The sensor module may include a light emitting module for emitting light and a plurality of light receiver modules for receiving light. The electronic device may identify the light reception amount for light (e.g., a first reception amount for a first light receiver module and a second reception amount for a second light receiver module) for each light receiver module based on the plurality of light receiver modules, and identify whether it is a situation in which the object is proximate (e.g., near, close, within a certain/specified distance etc.) to the electronic device or a situation in which the object is moving away from or towards the electronic device, based on the identified light reception amount.

According to certain embodiments of the disclosure, the electronic device may use the sensor module including the plurality of light receiver modules to identify a relative location of an object with respect to the electronic device more accurately. As the electronic device more accurately determines the relative location of the object, it is possible to reduce the malfunction of the functions that use the sensor module. This may improve (e.g., make more efficient) use of resources of the electronic device, such as reducing power consumption. A user's convenience for the electronic device may also be improved; that is, it may be more convenient to use the electronic device. In addition, various effects identified directly or indirectly through this document may be provided.

### [Brief Description of Drawings]

With respect to description of drawings, the same or similar elements may be marked by the same or similar reference numerals.
FIG. 1 is a block view of an electronic device in a network environment according to various embodiments of the disclosure.
FIG. 2a is a perspective view of a front surface of an electronic device according to various embodiments of the disclosure.
FIG. 2b is a perspective view of a rear surface of the electronic device according to various embodiments of the disclosure.
FIG. 3 is a view for explaining a sensor module disposed below a display of an electronic device according to various embodiments of the disclosure.
FIG. 4 is a block view of an electronic device using a sensor module including a plurality of light receiver modules according to various embodiments of the disclosure.
FIG. 5 is a flowchart illustrating a method of identifying a proximity of an object with respect to an electronic device using a plurality of light receiver modules according to various embodiments of the disclosure.
FIG. 6 is a flowchart illustrating a method of identifying a proximity of an object with respect to an electronic device using a plurality of light receiver modules and changing a configuration for a light emitting module according to the proximity of an object according to various embodiments of the disclosure.
FIG. 7a is a table illustrating a light reception amount and state information for a first light receiver module and a light reception amount and state information for a second light receiver module, corresponding to a proximity distance of an object with respect to an electronic device according to various embodiments of the disclosure.
FIG. 7b is a graph illustrating a light reception amount corresponding to a distance to an object based on the table of FIG. 7a according to various embodiments of the disclosure.
FIG. 8a is a view illustrating states of a first light receiver module and a second light receiver module corresponding to a relative movement direction of an object with respect to an electronic device according to various embodiments of the disclosure.
FIG. 8b is a view illustrating a sensor module in which a first light receiver module spaced apart by a first distance d1 and a second light receiver module spaced apart by a second distance d2 are disposed in a line based on a light emitting module according to various embodiments of the disclosure.
FIG. 8c is a view illustrating a first uncertainty distance for the first light receiver module of FIG. 8b and a second uncertainty distance for the second light receiver module of FIG. 8b according to various embodiments of the disclosure.
FIG. 9a is a view for explaining a sensor module including one light emitting module and a plurality of light receiver modules according to various embodiments of the disclosure.
FIG. 9b is a table illustrating state information of the plurality of light receiver modules of FIG. 9a corresponding to a distance between an electronic device and an object according to various embodiments of the disclosure.
FIG. 10a is a view illustrating a first light receiver module spaced to the right by the same distance and a second light receiver module spaced to the left by the same distance with respect to a light emitting module according to various embodiments of the disclosure.
FIG. 10b is a view illustrating a first uncertainty distance for the first light receiver module of FIG. 10a and a second uncertainty distance for the second light receiver module of FIG. 10a according to various embodiments of the disclosure.
FIG. 11 is a view illustrating a first light receiver module and a second light receiver module spaced apart in different directions and by different distances from each other with respect to the light emitting module according to various embodiments of the disclosure.

### [Mode for the Invention]

Hereinafter, various embodiments will be described in detail with reference to the accompanying drawings.

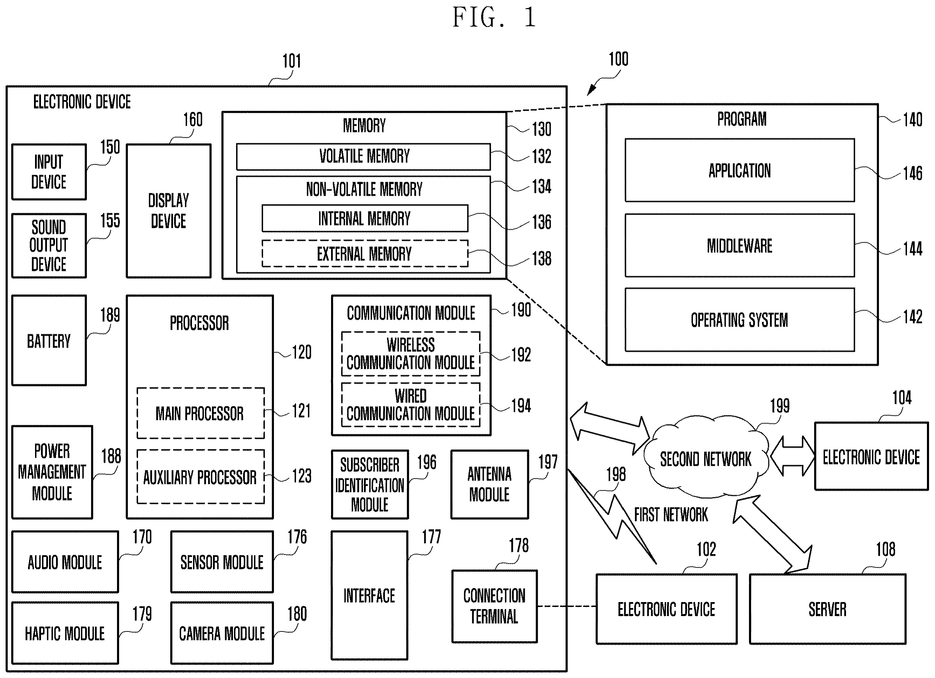

FIG. 1 illustrates an electronic device in a network environment according to an embodiment of the disclosure. Referring to FIG. 1, an electronic device 101 in a network environment 100 may communicate with an electronic device 102 via a first network 198 (e.g., a short-range wireless communication network), or at least one of electronic device 104 or a server 108 via a second network 199 (e.g., a long-range wireless communication network). The electronic device 101 may communicate with the electronic device 104 via the server 108. The electronic device 101 includes a processor 120, memory 130, an input module 150, an audio output module 155, a display module 160, an audio module 170, a sensor module 176, an interface 177, a connecting terminal 178, a haptic module 179, a camera module 180, a power management module 188, a battery 189, a communication module 190, a subscriber identity module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. As at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. The processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). The auxiliary processor 123 (e.g., an ISP or a CP) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The non-volatile memory 134 may include an internal memory 136 or external memory 138.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The audio output module 155 may output sound signals to the outside of the electronic device 101. The audio output module 155 may include, for example, a speaker or a receiver. The speaker may be used for general purposes, such as playing multimedia or playing record. The receiver may be used for receiving incoming calls. The receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. The display module 160 may include a touch sensor adapted to detect a touch, or a pressure sensor adapted to measure the intensity of force incurred by the touch.

The audio module 170 may convert a sound into an electrical signal and vice versa. The audio module 170 may obtain the sound via the input module 150, or output the sound via the audio output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. The sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. The interface 177 may include, for example, a high definition multimedia interface (HDMI), a universal serial bus (USB) interface, a secure digital (SD) card interface, or an audio interface.

A connection terminal 178 may include a connector via which the electronic device 101 may be physically connected with the external electronic device (e.g., the electronic device 102). The connection terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. The haptic module 179 may include, for example, a motor, a piezoelectric element, or an electric stimulator.

The camera module 180 may capture a still image or moving images. The camera module 180 may include one or more lenses, image sensors, image signal processors, or flashes.

The power management module 188 may manage power supplied to the electronic device 101. The power management module 188 may be implemented as at least part of, for example, a power management integrated circuit (PMIC).

The battery 189 may supply power to at least one component of the electronic device 101. The battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the AP) and supports a direct (e.g., wired) communication or a wireless communication. The communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or a standard of the Infrared Data Association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. The antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. Another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

Commands or data may be transmitted or received between the electronic device 101 and the external electronic device 104 via the server 108 coupled with the second network 199. Each of the electronic devices 102 or 104 may be a device of a same type as, or a different type, from the electronic device 101. All or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

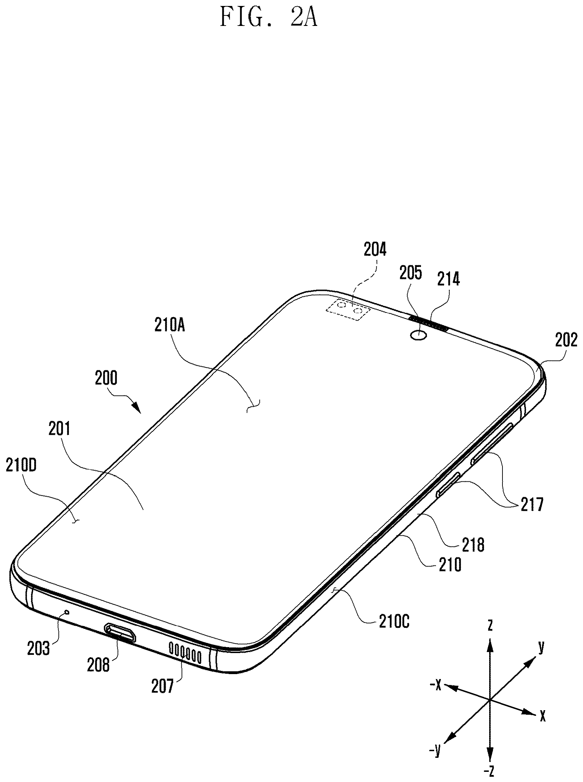

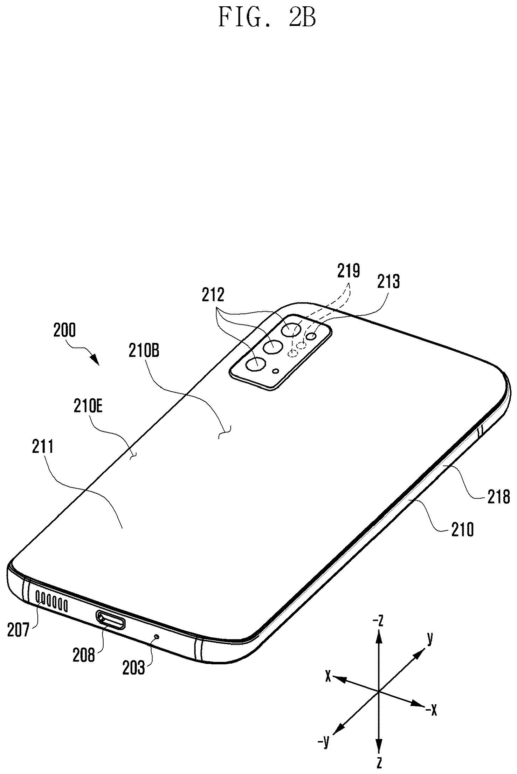

FIG. 2a is a perspective view of a front surface of an electronic device according to various embodiments of the disclosure, and FIG. 2b is a perspective view of a rear surface of the electronic device of FIG. 2a according to various embodiments of the disclosure.

An electronic device 200 in FIGS. 2a and 2b according to various embodiments may be similar to the electronic device 101 in FIG. 1 at least in part, or may include other embodiments of the electronic device.

With reference to FIGS. 2a and 2b, the electronic device 200 (e.g., an electronic device 101 in FIG. 1) according to an embodiment may include a housing 210. The housing 210 may include a first surface 210A (or a front surface), a second surface 210B (or a rear surface), and a lateral surface 210C arranged to surround a space between the first surface 210A and the second surface 210B. In another embodiment (not illustrated), the housing 210 may refer to a structure that forms part of the first surface 210A, second surface 210B, and lateral surface 210C of FIGS. 2a and 2b. According to an embodiment, the first surface 210A may be formed by a front plate 202 that is at least partially transparent (e.g., a glass plate including various coating layers, or a polymer plate). The second surface 210B may be formed by a rear surface plate 211 that is substantially opaque. The rear surface plate 211 may be formed from coted or colored glass, ceramic, polymer, metal (e.g., aluminum, stainless steel (STS), or magnesium), or a combination of at least two materials of the above-described materials. The lateral surface 210C may be formed of a side bezel structure (or a "lateral member") 218 bonded to the front plate 202 and the rear surface plate 211 and including metal and/or polymer. In some embodiments, the rear surface plate 211 and the side bezel structure 218 may be formed integrally and may include the same material (e.g., a metallic material such as aluminum).

In the illustrated embodiment, the front surface plate 202 may include, at the long opposite side edges thereof, first areas 210D, which are bent from the first surface 210A towards the rear surface plate 211 and extend seamlessly. In the illustrated embodiment (see FIG. 2b), the rear surface plate 211 may include, at the long opposite side edges thereof, second areas 210E, which are bent from the second surface 210B towards the front surface plate 202 and extend seamlessly. In some embodiments, the front plate 202 or the rear surface plate 211 may include only one of the first areas 210D or the second areas 210E. In some embodiments, the front surface plate 202 may not include the first areas 210D and the second areas 210E, but may include only a flat plane disposed parallel to the second surface 210B. In the embodiments described above, when viewed from a side of the electronic device 200, the side bezel structure 218 may have a first thickness (or width) on the side faces, which do not include the first areas 210D or the second areas 210E, and may have a second thickness (or width), which is smaller than the first thickness, on the side faces, which include the first areas or the second areas.

According to an embodiment, the electronic device 200 may include at least one of a display 201 (e.g., the display module 160 in FIG. 1), an input device 203 (e.g., the input module 150 in FIG. 1), a sound output device 207, 214 (e.g., the sound output module 155 in FIG. 1), sensor modules 204, 219 (e.g., the sensor module 176 in FIG. 1), camera modules 205, 212, 213 (e.g. the camera module 180 in FIG. 1), a key input device 217, an indicator (not illustrated) (e.g., the interface 177 in FIG. 1), and a connector 208 (e.g., the connection terminal 178 in FIG. 1). In some embodiments, at least one of the components of the electronic device 200 (e.g., the key input devices 217, or the indicator) may be omitted, or a different component may be added to the electronic device 200.

The display 201 may be exposed through, for example, a substantial part of the front surface plate 202. In some embodiments, at least part of the display 201 may be exposed through the front surface plate 202 forming the first surface 210A, and the first region 210D of the lateral surface 210C. The display 201 may be coupled to or disposed adjacent to a touch-sensitive circuit, a pressure sensor that is capable of measuring a touch intensity (pressure), and/or a digitizer that detects a magnetic-field-type stylus pen. In some embodiments, at least some of the sensor modules 204 and 219 and/or at least some of the key input devices 217 may be disposed in the first areas 210D and/or the second areas 210E.

The input device 203 may include a microphone. In some embodiments, the input device 203 may include a plurality of microphones 203 disposed to sense the direction of sound. The sound output devices 207 and 214 may include speakers 207 and 214. The speakers 207 and 214 may include an external speaker 207 and a receiver 214 for a call. In some embodiment, the microphone 203, the speakers 207 and 214, and the connector 208 may be disposed inside the electronic device 200 and may be exposed to the external environment through at least one hole formed in the housing 210. In some embodiments, the hole formed in the housing 210 may be used commonly for the microphone 203 and the speakers 207 and 214. In some embodiments, the sound output devices 207 and 214 may include a speaker (e.g., a piezo speaker) operating without using the hole formed in the housing 210.

The sensor modules 204 and 219 may generate an electrical signal or a data value corresponding to an operating state inside the mobile electronic device 200 or an environment state outside the mobile electronic device 200. The sensor modules 204 and 219 may include, for example, a first sensor module 204 (e.g., a proximity sensor, an optical sensor) and/or a second sensor module (not illustrated) (e.g., a fingerprint sensor), disposed at the first surface 210A of the housing 210, and/or a third sensor module 219 (e.g., a heart rate monitor (HRM) sensor), disposed at the second surface 210B of the housing 210. The fingerprint sensor may be disposed at the first surface 210A of the housing 210. The fingerprint sensor (e.g., an ultrasonic fingerprint sensor or an optical fingerprint sensor) may be disposed under the display 201 of the first surface 210A. The electronic device 200 may further include unillustrated sensor modules, for example, at least one of a gesture sensor, a gyro sensor, an air pressure sensor, a magnetic sensor, an acceleration sensor, a grip sensor, a color sensor, an infrared (IR) sensor, a biometric sensor, a temperature sensor, a humidity sensor and an illuminance sensor 204. According to an embodiment, the first sensor module 204 may be disposed below the display 201 and may include a light emitting module for emitting light and a light receiver module for receiving light. For example, the first sensor module 204 may include an IR sensor.

The camera modules 205, 212, and 213 may include a first camera device 205 disposed at the first surface 210A of the electronic device 200, a second camera device 212 disposed at the second surface 210B thereof, and/or a flash 213. The camera modules 205 and 212 may include one or a plurality of lenses, an image sensor, and/or an image signal processor. The flash 213 may include, for example, a light emitting diode or a xenon lamp. In some embodiments, two or more lenses (e.g., a wide angle lens and a telephoto lens) and image sensors may be disposed at one surface of the electronic device 200. According to an embodiment, the electronic device 200 may utilize at least a portion of an image sensor included in the camera module 205 as a light receiver module. For example, the electronic device 200 may perform a proximity sensing function based on a light emitting module of the first sensor module 204 and an image sensor (e.g., functioning as a light receiver module) of the camera module 205.

The key input device 217 may be disposed at the side surface 210C of the housing 210. In another embodiment, the electronic device 300 may not include some or all of the above-described key input devices 217, and the key input device 217 that is not included may be implemented in other forms such as a soft key on the display 201. In some embodiments, the key input device 217 may be implemented using a pressure sensor included in the display 201.

The indicator (not illustrated) may be disposed at, for example, the first surface 210A of the housing 210. The indicator may provide, for example, status information of the electronic device 200 in an optical form. In another embodiment, the light emitting device may provide, for example, a light source interworking with an operation of the camera module 205. The indicator may include, for example, a light emitting diode (LED), an IR LED, and a xenon lamp.

The connector hole 208 may include a connector hole (e.g., a USB connector or an IF module (interface connector port module)) that can receive a connector for transmitting and receiving power and/or data to and from an external electronic device, and/or a connector hole (or an earphone jack) that can receive a connector for transmitting and receiving audio signals to and from an external electronic device.

Some camera modules 205 of the camera modules 205 and 212, some sensor modules 204 of the sensor modules 204 and 219, or the indicator may be disposed to be exposed through the display 201. For example, the camera module 205, the sensor module 204, or the indicator may be disposed inside the electronic device 200 so as to contact the external environment through a transmissive area or an opening perforated to the front surface plate 202 in the display 301. According to an embodiment, an area where the display 201 and the camera module 205 face each other is a part of an area displaying content and may be formed as a transmissive area having a certain transmittance. According to an embodiment, the transmissive area may be formed to have transmittance in a range of about 5% to about 20%. The transmissive area may include an area through which light, formed by an image sensor and forming an image, passes and that overlaps a valid area (e.g., a view angle area) of the camera module 205. For example, the transmissive area of the display 201 may include an area having lower pixel density than those in the surroundings. For example, the transmissive region may replace the aforementioned opening. For example, the camera module 205 may include an under display camera (UDC). In another embodiment, some sensor module 204 may be disposed to perform a corresponding function without being visually exposed through the front surface plate 202, in the internal space of the electronic device 200. For example, in this case, the area of the display 201 facing the sensor module 204 may not require a perforated opening.

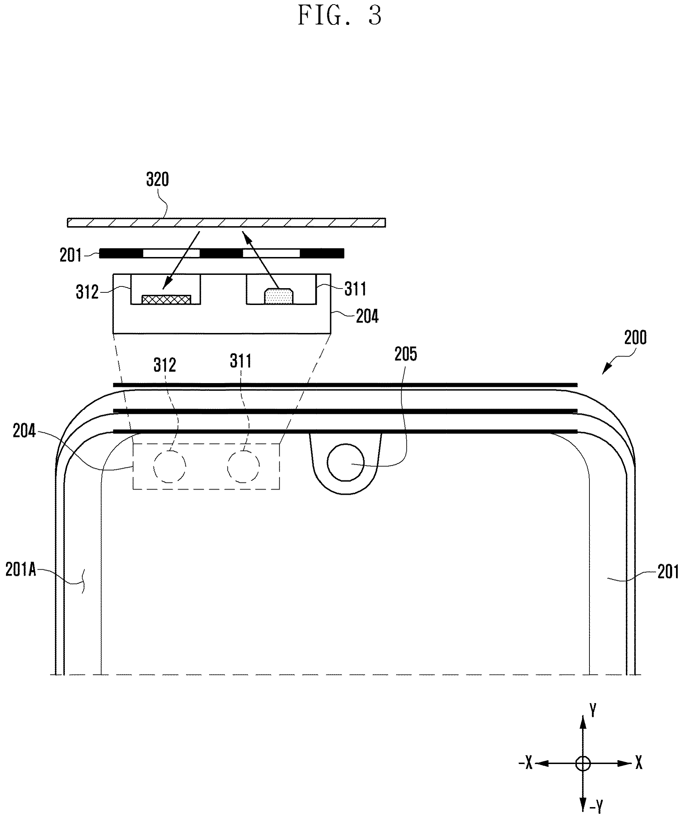

FIG. 3 is a view for explaining a sensor module disposed below a display of an electronic device according to various embodiments of the disclosure.

With reference to FIG. 3, in an electronic device (e.g., the electronic device 200 in FIG. 2a), a sensor module (e.g., the first sensor module 204 in FIG. 2a) and a camera module (e.g., the first camera device 205 in FIG. 2a) may be disposed, corresponding to the first surface 210A of a display (e.g., the display 201 in FIG. 2a). For example, the sensor module 204 may include a light emitting module 311 for emitting light and a light receiver module 312 for receiving light, and may be disposed below the display 201. The light emitting module 311 and the light receiver module 312 may be substantially disposed in a line along the x-axis direction. The sensor module 204 may be disposed in the internal space of the electronic device 200 and perform its function (e.g., a proximity sensing function) without being visually exposed.

With reference to FIG. 3, the electronic device 200 may use the sensor module 204 to identify a proximity of an object 320 (e.g., a human body and/or a thing) to the electronic device 200. For example, the light emitting module 311 of the sensor module 204 may emit light so that the light passes through at least a part of the display 201 and is emitted to an external environment. In the case that the object 320 is proximate to the electronic device 200 (e.g., within a certain distance, or suitably close so as to at least partially reflect the emitted light back to the sensor module 204), the light emitted from the light emitting module 311 may be at least partially reflected by the object 320, a portion of the reflected light may be reflected by the sensor module 204, and a portion of the reflected light may be received through the light receiver module 312. According to an embodiment, each of the light emitting module 311 and light receiver module 312 of the sensor module 204 may be individually configured with an orientation angle (e.g., an orientation view). For example, the light emitting module 311 may emit light to an external environment based on a configured orientation angle (e.g., a first orientation angle), and the light receiver module 312 may receive light from the external environment based on a configured orientation angle (e.g., a second orientation angle). According to various embodiments, at least part of the object may be positioned above the light emitting module 311 (e.g., directly above, in front of etc.).

According to various embodiments, in response to the proximity of the object 320 to the electronic device 200, there may exist an uncertainty distance (e.g., an unidentified area) in which it may be difficult to identify the location of the object 320, e.g., the uncertainty distance may be a distance from (e.g., measured from) the sensor module 204, the light emitting module 311, the light receiver module 312 or the electronic device 200. For example, the uncertainty distance may be determined based on at least one of: a separation distance between the light emitting module 311 and the light receiver module 312, the first orientation angle of the light emitting module 311, the second orientation angle of the light receiver module 312, a configuration value of the light emitting module 311, and/or a threshold relating to a light reception amount. For example, in the case that the object 320 is located within an uncertainty distance, it may be difficult for the electronic device 200 to detect the location of the object 320, e.g., it may be difficult for the electronic device 200 to accurately detect the location of the object 320 (e.g., a accuracy threshold cannot be met in detecting the location of the object 320). This may be because, for example, as the object is moved closer to the sensor module 204, a distance from the sensor module 204 may be reached at which point further movement of the object towards the sensor module 204 results in the light receiver module 312 receiving less reflected light from the object due to a part (or a larger part) of the object being outside a detection angle of the light receiver module 312 and/or a light emission angle of the light emitting module 311. As the object is moved closer still, the amount of reflected light received may continue to decrease until the amount of reflected light received by the light receiver module 312 is less than a threshold (e.g., this may occur at the uncertainty distance), at which point the light receiver module 312 may no longer detect the object.

According to another embodiment, the electronic device 200 may use the camera module 205 so that at least a part of the image sensor of the camera module 205 functions as a light receiver module. For example, in performing a proximity sensing function, the electronic device 200 may emit light through the light emitting module 311 of the sensor module 204 and receive light through the image sensor of the camera module 205. In such an embodiment, for example, a separate light receiver module may not be provided or the part of the image sensor may act as one light receiver module amongst a plurality of light receiver modules.

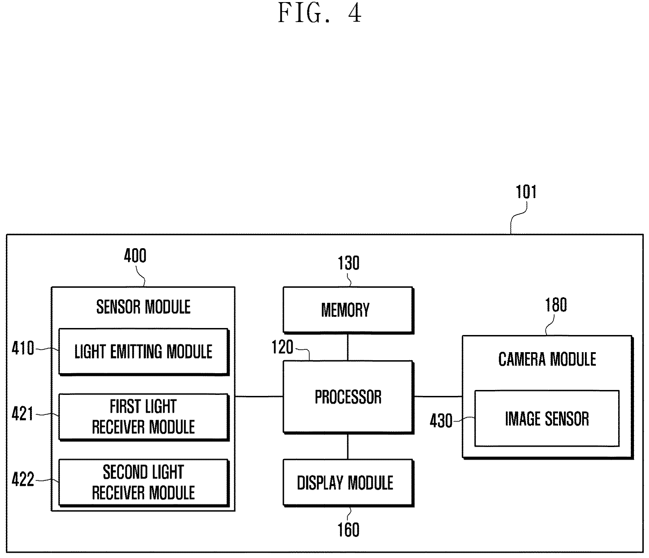

FIG. 4 is a block view of an electronic device using a sensor module including a plurality of light receiver modules according to various embodiments of the disclosure.

The electronic device in FIG. 4 (e.g., the electronic device 101 in FIG. 1) may be at least partially similar to the electronic device 200 in FIG. 2a or may further include other embodiments of the electronic device 101.

According to an embodiment, the electronic device 101 may identify a proximity of an object to the electronic device 101 by using the sensor module 400 (e.g., the sensor module 176 in FIG. 1 or a proximity sensor). In certain examples, identifying a proximity of an object to the electronic device 101 may refer to identifying whether an object is within a specified distance or range from the electronic device 101, identifying whether an object is detected by the electronic device 101 (i.e., is near enough to be detected), or identifying whether an object is moving in the environment of the electronic device 101. For example, the electronic device 101 may determine whether it is a situation in which an object is proximate to the electronic device 101 or a situation in which an object is moving away from, or towards, the electronic device 101. For example, the device 101 may determine whether it is a situation in which the electronic device 101 is closely proximate to an object (e.g., within a given/specified distance or range) or a situation in which the electronic device 101 is moving away from an object. The electronic device 101 may identify a relative location and/or relative movement of an object based on the location of the electronic device 101, i.e., the relative location/movement may be relative to the electronic device 101. The sensor module 400 may include a plurality of light receiver modules (e.g., a first light receiver module 421 and/or a second light receiver module 422), and the electronic device 101 may measure a first light reception amount by the first light receiver module 421 and a second light reception amount by the second light receiver module 422. For example, light may be emitted from the light emitting module 410 of the sensor module 400, and the light emitted may be at least partially reflected by an object. The electronic device 101 may measure the first light reception amount and second light reception amount corresponding to the reflected light reflected by the object, and identify the location of the object based on the first light reception amount and the second light reception amount. In an example, one of the first light receiver module 421 and the second light receiver module 422 is implemented using part of the image sensor 430 of a camera module 205.

According to an embodiment, the electronic device 101 may measure the first light reception amount and/or the second light reception amount for the reflected light reflected by an object, based on a plurality of light receiver modules (e.g., the first light receiver module 421 and/or the second light receiver module 422), and identify the location of the object more accurately. For example, the electronic device 101 may subdivide and identify the location of the object based on the measured first light reception amount and/or second light reception amount. According to another embodiment, based on the measured first light reception amount and/or second light reception amount, a detectable range for the object may be expanded, and the electronic device 101 may identify the location of the object based on the expanded detectable range.

With reference to FIG. 4, the electronic device 101 may include a processor (e.g., the processor 120 in FIG. 1), a memory (e.g., the memory 130 in FIG. 1), a display module (e.g., the display module 160 in FIG. 1), a camera module (e.g., the camera module 180 in FIG. 1), and/or a sensor module 400 (e.g., the sensor module 176 in FIG. 1). The sensor module 400 may include one light emitting module 410 and a plurality of light receiver modules (e.g., the first light receiver module 421 and the second light receiver module 422). When performing a proximity sensing function using the sensor module 400, the electronic device 101 may identify a proximity of an object to the electronic device 101 based on the plurality of light receiver modules. The electronic device 101 may change the configuration value of the light emitting module 410 in response to a movement of an object close to the electronic device 101 or a movement of the electronic device 101 close to the object, and emit light (e.g., a beam) based on the changed configuration value. The electronic device 101 may more accurately determine the location of an object by using a plurality of light receiver modules. As the electronic device 101 more accurately determines the location of the object, malfunction of functions using the sensor module 400 can be reduced. According to an embodiment, user convenience for using the electronic device 101 may be improved.

The processor 120 may execute a program (e.g., the program 140 in FIG. 1) stored in the memory 130 to control at least one other component (e.g., a hardware or software component), and may perform various data processing or computation. The processor 120 may include a plurality of processor modules (e.g., a first processor module and a second processor module), each of the plurality of processor modules may partially divide and perform any data computation or data processing.

The memory 130 may store configuration information (e.g., a configuration value) of the light emitting module 410 and the plurality of light receiver modules (e.g., the first light receiver module 421 and/or the second light receiver module 422) included in the sensor module 400. The processor 120 may operate the sensor module 400 based on the configuration information stored in the memory 130. For example, the memory 130 may store information related to the orientation angle (e.g., orientation view) of the light emitting module 410 and information related to the orientation angle of the plurality of light receiver modules. The memory 130 may store light emission configuration information for light (e.g., an intensity of light, an amount of light, a current value applied to the light emitting module 410, light emission time, and/or a number of pulses of light) in a situation in which the light (e.g., beam) is emitted through the light emitting module 410. In the case that the light emission configuration information is updated, the configuration information may be changed to the updated light emission configuration information and stored. The memory 130 may store information related to a first uncertainty distance determined based on the light emitting module 410 and the first light receiver module 421 (e.g., information on a distance - from the electronic device 101, sensor module 400, light emitting module 410 or first light receiver module 421 - within which the accuracy of detecting a location of an object may be low (e.g., below a threshold) or a location of an object may not be accurately detected using the first light receiver module 421) and information related to a second uncertainty distance determined based on the light emitting module 410 and the second light receiver module 422 (e.g., information on a distance - from the electronic device 101, sensor module 400, light emitting module 410 or second light receiver module 422 - within which the accuracy of detecting a location of an object may be low (e.g., below a threshold) or a location of an object may not be accurately detected using the second light receiver module 422). According to an embodiment, the processor 120 may determine whether the object is proximate within an uncertainty distance based on the information related to the first uncertainty distance and the information related to the second uncertainty distance, and may change the light emission configuration information for the light emitting module 410 and emit light.

The display module 160 may be activate or inactive based on the operation of the electronic device 101. For example, in the case that the display module 160 is activated, the electronic device 101 may display a screen through the display module 160, and in the case that the display module 160 is inactive, the electronic device 101 may not display a screen through the display module 160. The activation of the display module 160 may mean that a screen is turned on, and the inactivation of the display module 160 may mean that a screen is turned off. According to an embodiment, the electronic device 101 may display a screen through the display module 160 if the electronic device 101 identifies a state in which an object is not proximate to the front surface (e.g., the first surface 210A in FIG. 2a) of the electronic device 101 using the sensor module 400; e.g., this may be a state in which the electronic device 101 does not detect, or is unable to detect, an object to be within a given/specified/predetermined distance of the front surface. According to an embodiment, the electronic device 101 may not display a screen through the display module 160 if it identifies a state in which an object is proximate to the front surface (e.g., the first surface 210A in FIG. 2a) of the electronic device 101 using the sensor module 400; e.g., this may be a state in which the electronic device 101 detects an object to be within a given/specified/predetermined distance of the front surface, based on output of the sensor module 400. According to an embodiment, the electronic device 101 may identify the location of an object (e.g., identification of a proximity of an object to the electronic device 101) based on a plurality of light receiver modules (e.g., the first light receiver module 421 and/or the second light receiver module 422) and perform the function configured (e.g., an operation of changing the display module 160 to an active state or an inactive state, or an operation of maintaining the display module 160 in an active state or in an inactive state) according to the location of the object. According to an embodiment, as the electronic device 101 more accurately determines the location of an object, malfunctions of functions (e.g., active/inactive operations of the display module 160) using the sensor module 400 may be reduced.

The camera module 180 may capture an image using light, and may include one or more lenses, an image sensor 430, an image signal processor, and/or a flash. For example, the image sensor 430 may generate an image by converting light received through a lens into a digital signal. The image sensor 430 may perform substantially the same function as the light receiver module of the sensor module 400. According to an embodiment, the electronic device 101 may use at least a part of the image sensor 430 of the camera module 180 as a light receiver module for the sensor module 400. According to an embodiment, the electronic device 101 may use at least some of components that perform an operation of receiving light, such as a light receiver module, as a light receiver module for the sensor module 400.

The sensor module 400 may include a component that detects a state of the external environment (e.g., a proximity of an object to the electronic device 101) using light. The sensor module 400 may be constituted based on one light emitting module 410 and a plurality of light receiver modules (e.g., the first light receiver module 421 and/or the second light receiver module 422), and may include at least one of various types of sensors that use light (e.g., a proximity sensor, a UV sensor, an IR sensor, an iris sensor, a camera module (e.g., an under display camera (UDC)), an RGB sensor, and/or an illumination sensor). For example, the light emitting module 410 may include a component that generates light and emits light to an external environment, and the first light receiver module 421 and the second light receiver module 422 may include a component that receives light from the external environment. According to an embodiment, the processor 120 may emit light (e.g., control the light emitting module 410 to emit light) toward an external environment based on an orientation angle (e.g., an orientation view) and light emission configuration information for the light emitting module 410. The light emitted may be reflected by an object located outside the electronic device 101, and at least a portion of the reflected light may be received by the light receiver module of the electronic device 101. For example, in the case that an object is located within a certain distance from the light emitting module 410, the light emitted from the light emitting module 410 may be at least partially reflected by the object, and at least a portion of the reflected light may be received through the light receiver modules 421 and 422. According to an embodiment, the processor 120 may measure a first light reception amount of the light received based on a first orientation angle (e.g., a first orientation view) for the first light receiver module 421, and a second light reception amount of the light received based on the second orientation angle (e.g., a second orientation view) for the second light receiver module 422.

According to an embodiment, the processor 120 may identify whether it is a situation/case in which an object is proximate to the electronic device 101 or a situation/case in which an object is moving away from or towards the electronic device 101, based on the first and second light reception amounts. If it is identified that an object is proximate to the electronic device 101, the processor 120 changes the light emission configuration information (e.g., an intensity of light, an amount of light, a current value applied to the light emitting module 410, light emission time and/or a number of pulses of light) for the light emitting module 410. According to the invention, the processor 120 increases the intensity of light by increasing the current value applied to the light emitting module 410, increasing the light emission time thereby increasing the amount of light to be, or being, emitted, or increase the number of pulses of light emitted within a unit time. According to an embodiment, the processor 120 may increase the sensitivity of identifying the movement and location of an object by increasing the intensity of light emitted. For example, in the case that the intensity of light emitted is increased, the processor 120 may identify the location of the object even if the object is within the uncertainty distance that occurs due to low light sensitivity. According to an embodiment, the electronic device 101 can more accurately identify the location of an object by changing light emission configuration information for the light emitting module 410 and may reduce malfunctions of functions that use the sensor module 400.

According to an embodiment, the processor 120 may identify a state in which at least a part of an object is located within an uncertainty distance that is determined based on the light emitting module 410 and light receiver modules (e.g., the first light receiver module 421 and/or the second light receiver module 422), and may determine state information on the first light receiver module 421 and the second light receiver module 422 as a "CLOSE" state. For example, the first light receiver module 421 and the second light receiver module 422 may obtain a light reception amount according to a situation in which an object is proximate to the electronic device 101, and the processor 120 may measure a light reception amount (e.g., a first light reception amount, a second light reception amount) for each light receiver module, based on the obtained light reception amount. The processor 120 may determine state information on a light receiver module as a "CLOSE" state, based on the measured light reception amount. For another example, in the case that the light reception amount according to a situation in which an object moves away from the electronic device 101 is obtained, the processor 120 may measure a light reception amount (e.g., a first light reception amount, a second light reception amount) for each light receiver module, based on the obtained light reception amount. Based on the measured light reception amount, the processor 120 may determine state information on the light reception module as a "FAR" state. In the case that the light reception amount exceeds a configured threshold value, the processor 120 may determine that it is a situation in which an object is proximate to the electronic device 101 (e.g., a "CLOSE" state). In the case that the light reception amount is less than a configured threshold value, the processor 120 may determine that it is a situation that an object is moved away from the electronic device 101 (e.g., a "FAR" state). According to an embodiment, in the case that an object is located within an uncertainty distance (e.g., grey zone) determined based on the light emitting module 410 and light receiver modules (e.g., the first light receiver module 421 and/or the second light receiver module 422) (e.g., a case in which an object is disposed adjacent to the electronic device 101 and the sensitivity of light received is lowered), the light reception amount of light received through the first light receiver module 421 and the second light receiver module 422 may be lowered. For example, the electronic device 101 may determine a proximity of an object based on a change amount of the first light reception amount and a change amount of the second light reception amount. Even in a situation in which the object is disposed adjacent to the electronic device 101 and the light reception amount is measured to be low, state information on the first light receiver module 421 and the second light receiver module 422 may be determined to be in a "CLOSE" state.

According to an embodiment, the first light reception amount through the first light receiver module 421 may be determined or affected based on a first orientation angle of the first light receiver module 421 and/or a first distance spaced between the light emitting module 410 and the first light receiver module 421. The second light reception amount through the second light receiver module 422 may be determined or affected based on the second orientation angle of the second light receiver module 422 and/or a second distance spaced between the light emitting module 410 and the second light receiver module 422. According to an embodiment, the processor 120 may identify a state of an object and a relative location of an object with respect to the electronic device 101 based on the first light reception amount and the second light reception amount.

According to an embodiment, even in the case that an object is in proximity within an uncertainty distance, the processor 120 may identify the relative state and location of the object based on the first light reception amount (e.g., a change amount of the first light reception amount) and the second light reception amount (e.g., a change amount of the second light reception amount), and may reduce malfunctions of functions using the sensor module 400. In the case that an object is proximate within an uncertainty distance, the processor 120 may determine state information on light receiver modules (e.g., the first light receiver module 421 and the second light receiver module 422) as a "CLOSE" state.

The electronic device 101 includes the light emitting module 410, the first light receiver module 421 disposed apart from the light emitting module 410 by a first distance, the second light receiver module 422 disposed apart from the light emitting module 410 by a second distance different from the first distance, the memory 130, and the processor 120 operatively connected to the light emitting module 410, the first light receiver module 421, the second light receiver module 422, and the memory 130. The processor 120 emits light to an external environment through the light emitting module 410, identify a first light reception amount of the light obtained through the first light receiver module 421 based on the light emitted, identifies a second light reception amount of the light obtained through the second light receiver module 422 based on the light emitted, and determine a proximity of an object to the electronic device 101 based on the first light reception amount and the second light reception amount.

According to an embodiment, the memory 130 may store a first threshold value configured based on the first light receiver module 421 and a second threshold value configured based on the second light receiver module 422, determine that an object is in proximity based on the first light receiver module 421 in the case that the identified first light reception amount exceeds the first threshold value, and determine that the object is in proximity based on the second light receiver module 422 in the case that the identified second light reception amount exceeds the second threshold value.

According to the invention, the processor 120 changes light emission configuration information for the light emitting module 410 so that an intensity of light emitted is increased in response to the proximity of the object.

According to an embodiment, the light emission configuration information may include at least one of an intensity of light, an amount of light, a current value applied to the light emitting module 421, light emission time, and a number of pulses of light emitted within a unit time.

According to an embodiment, the light emitting module 410, the first light receiver module 421, and the second light receiver module 422 are each configured to have an orientation angle, and it is characterized in that a first orientation angle corresponding to the first light receiver module 421 and a second orientation angle corresponding to the second light receiver module 422 are substantially the same.

According to an embodiment, the processor 120 may identify whether an object moves within a first unidentified distance corresponding to the first light receiver module based on the first light reception amount and the second light reception amount, and determine that the object is in proximity in response to the object moving within the first unidentified distance. The first unidentified distance may be determined based on the first distance, the first orientation angle of the first light receiver module, and a third orientation angle of the light emitting module.

According to an embodiment, the processor 120 may identify whether an object moves within a second unidentified distance corresponding to the second light receiver module based on the first light reception amount and the second light reception amount, and determine that the object is proximity in response to the object moving within the second unidentified distance. The second unidentified distance may be determined based on the second distance, the second orientation angle of the second light receiver module, and the third orientation angle of the light emitting module 410.

According to an embodiment, a camera module 180 including an image sensor 430 may be further included, and the processor 120 may use the image sensor 430 as a third light receiver module to receive the reflected light reflected by the object.

According to an embodiment, the processor 120 may identify a first change amount of the measured first light reception amount and a second change amount of the measured second light reception amount for a predetermined period of time, and determine a proximity of an object to the electronic device 101 based on the identified first change amount and second change amount.

According to an embodiment, a display module 160 may be further included, and the processor 120 may control the display module 160 to be inactive in response to a proximity of the object.

According to various embodiments, the electronic device 101 may include the light emitting module 410, the first light receiver module 421 disposed apart from the light emitting module 410 by a first distance and configured to have a first orientation angle, the second light receiver module 422 disposed apart from the light emitting module 410 by the first distance and configured to have a second orientation angle different from the first orientation angle, the memory 130, and the processor 120 operatively connected to the light emitting module 410, the first light receiver module 421, the second light receiver module 422, and the memory 130. The processor 120 may emit light to an external environment through the light emitting module 410, identify the first reception amount of light obtained through the first light receiver module 421 based on the light emitted, identify the second light reception amount of the light obtained through the second light receiver module 422 based on the light emitted, and determine a proximity of an object to the electronic device 101 based on the first light reception amount and the second light reception amount.

According to an embodiment, the memory 130 may store a first threshold value configured based on the first light receiver module 421 and a second threshold value configured based on the second light receiver module 422. The processor 120 may determine that the object is in proximity based on the first light receiver module 421, in the case that the identified first light reception amount exceeds the first threshold value, and determine that the object is in proximity based on the second light receiver module 422, in the case that the identified second reception amount exceeds the second threshold value.

According to the invention, the processor 120 changes light emission configuration information for the light emitting module 410 so that the intensity of light emitted is increased in response to the proximity of the object.

According to an embodiment, the processor 120 may identify whether the object moves within a first unidentified distance corresponding to the first light receiver module 421 based on the first light reception amount and the second light reception amount, and determine that the object is in proximity in response to the object moving within the first unidentified distance. The first unidentified distance may be determined based on the first distance, the first orientation angle of the first light receiver module, and the third orientation angle of the light emitting module 410.

According to an embodiment, the processor 120 may identify whether the object moves within a second unidentified distance corresponding to the second light receiver module 422 based on the first light reception amount and the second light reception amount, and determine that the object is in proximity in response to the object moving within the second unidentified distance. The second unidentified distance may be determined based on the second distance, the second orientation angle of the second light receiver module, and the third orientation angle of the light emitting module.

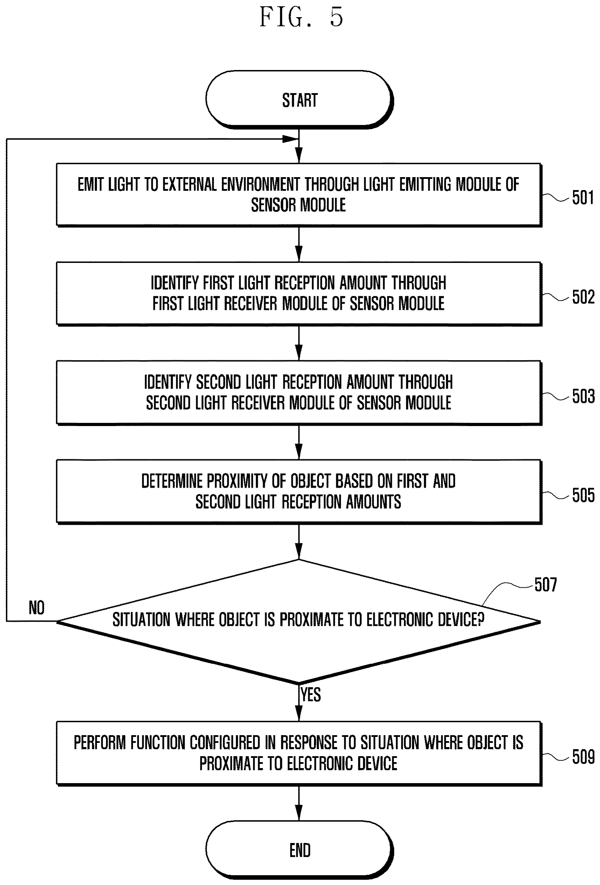

FIG. 5 is a flowchart illustrating a method of identifying a proximity of an object to an electronic device using a plurality of light receiver modules according to various embodiments of the disclosure.

The electronic device in FIG. 5 (e.g., the electronic device 101 in FIG. 1) may be at least partially similar to the electronic device 200 in FIG. 2a, or may further include other embodiments of the electronic device 101. It will be appreciated that one or more of the operations of FIG. 5 may be omitted, the order of one or more of the operations of FIG. 5 may be changed, and/or one or more other operations may be performed in addition to an operation of FIG. 5, as desired.

According to an embodiment, the electronic device 101 may identify a proximity of an object to the electronic device 101 (e.g., identify a distance to the object from the electronic device 101, identify a nearness of the object to the electronic device 101, identify that the object is close enough to allow the electronic device 101 to detect light reflected by the object etc.) by using a plurality of light receiving modules (e.g., the first light receiver module 421 and/or second light receiver module 422 in FIG. 4) included in the sensor module 400 (e.g., the sensor module 176 in FIG. 1, the sensor module 400 in FIG. 4, and a proximity sensor). The processor (e.g., the processor 120 in FIG. 1) of the electronic device 101 may identify a first light reception amount through the first light receiver module 421 and a second light reception amount through the second light receiver module 422. The processor 120 may determine the proximity of the object (e.g., the relative movement direction and location of the object with respect to the electronic device 101) based on the first and second light reception amounts. The processor 120 may perform a configured function (e.g., an inactivation of a display module (e.g., the display module 160 in FIG. 1)) in response to a situation in which an object is proximate to the electronic device 101. According to an embodiment, the electronic device 101 may determine a proximity of an object by using a plurality of light receiver modules, and perform a configured function corresponding to the determined situation. According to an embodiment, the electronic device 101 may operate the sensor module 400 at least in part in response to a specific event (e.g., a call received event), and identify the first light reception amount of light received through the first light receiver module 421 of the sensor module 400.

With reference to FIG. 5, in operation 501, the processor 120 of the electronic device 101 emits light (e.g., emit a beam of light) to an external environment through a light emitting module (e.g., the light emitting module 410 in FIG. 4). For example, the sensor module 400 is a sensor component that uses light, and may include the light emitting module 410 for emitting light to an external environment and a plurality of light receiver modules (e.g., the first light receiver module 421 and/or the second light receiver module 422) for receiving light from the external environment. For example, the processor 120 may emit light through the light emitting module 410 to detect an object proximate to the electronic device 101.

In operation 502, the processor 120 identifies the first light reception amount through the first light receiver module 421 of the sensor module 400. For example, the light emitted to an external environment through the light emitting module 410 may be at least partially reflected by an object located outside the electronic device 101, and the reflected light may be received through at least one of the plurality of light receiver modules (e.g., the first light receiver module 421 and/or the second light receiver module 422). In operation 502, the processor 120 may identify the first light reception amount of the reflected light received through the first light receiver module 421. For example, the processor 120 may identify the first light reception amount of the reflected light received through the first light receiver module 421 based on the light emitted through the light emitting module 410. According to another embodiment, the processor 120 may identify a change amount of the first light reception amount for a predetermined period of time through the first light reception module 421.

In operation 503, the processor 120 identifies a second light reception amount of the reflected light received through the second light receiver module 422. For example, the processor 120 may identify a second light reception amount of the reflected light received through the second light receiver module 422 based on the light emitted through the light emitting module 410. According to an embodiment, the electronic device 101 may be designed so that a first distance spaced between the light emitting module 410 and the first light receiver module 421 and a second distance spaced between the light emitting module 410 and the second light receiver module 422 are different from each other. Alternatively or additionally, the electronic device 101 may be designed so that the first orientation angle (e.g., a first orientation view) of the first light receiver module 421 and the second orientation angle (e.g., a second orientation view) of the second light receiver module 422 are different from each other. In the case that the first distance and the second distance are not identical to each other, and/or the first orientation angle and the second orientation angle are not identical to each other, the first light reception amount and the second light reception amount according to the state of the object may be measured differently. According to another embodiment, the processor 120 may identify a change amount of the second light reception amount for a predetermined period of time through the second light reception module 422. It will be appreciated that operations 502 and 503 may be performed in any order or simultaneously.

In operation 505, the processor 120 determines a proximity, position, location, motion and/or orientation of an object based on the first light reception amount and the second light reception amount. For example, the processor 120 may determine whether the object moves in a direction closer to the electronic device 101 or the object moves in a direction away from the electronic device 101. For another example, the processor 120 may determine whether the electronic device 101 moves in a direction closer to the object or the electronic device 101 moves in a direction away from the object. The relative motion with respect to the object and/or electronic device 101 may include which direction the object is moving based on a first uncertainty distance (e.g., a first uncertainty area) according to the first light receiver module 421 and a second uncertainty distance (e.g., a second uncertainty area) according to the second light receiver module 422.

According to another embodiment, the processor 120 may identify a first change amount for the first light reception amount (e.g., an amount of light received through the first light receiver module 421) and/or a second change amount for the second light reception amount (e.g., an amount of light received through the second light receiver module 422), and identify, based on the first change amount and/or the second change amount, the relative motion and/or location of the object with respect to the electronic device 101. For example, the first change amount may refer to a change in the amount of light received with respect to the first light receiver module 421 measured at different points of time in a situation in which the object is in proximity. The second change amount may refer to a change in the amount of light received by the second light receiver module 422 measured at different points of time in a situation in which the object is in proximity.

According to another embodiment, a situation in which both the first light reception amount and the second light reception amount increase may be a first situation in which an object is more proximate (e.g., has moved closer to) to the electronic device 101. For example, a situation in which the first light reception amount decreases below the first threshold value may be a second situation in which an object enters within the first uncertainty distance. For example, a situation in which the second light reception amount decreases below the second threshold value may be a third situation in which an object enters within the second uncertainty distance. For another example, a situation in which the first light reception amount is lowered to less than the first threshold value and the second light reception amount is also lowered to less than the second threshold value may be a fourth situation in which an object comes close to the electronic device 101 (e.g., to within both the first uncertainty distance (e.g., first unidentified area) and the second uncertainty distance (e.g., second unidentified area) of the electronic device 101) to the extent that it may be difficult to determine the location of the object from the electronic device 101. According to another embodiment, the processor 120 may identify the above-mentioned first situation, second situation, third situation, and/or fourth situation, and determine a relative location of an object with respect to the electronic device 101.

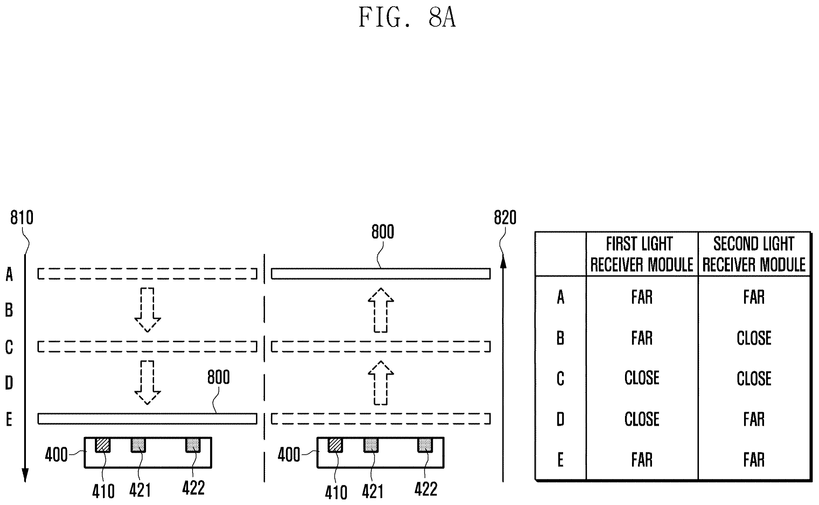

In operation 507, the processor 120 determines whether the object in proximity to (e.g., proximate to) the electronic device 101. For example, in the case that the first light reception amount through the first light receiver module 421 and the second light reception amount through the second light receiver module 422 exceed the respectively configured threshold values (e.g., the first threshold value and the second threshold value), the processor 120 can identify that the object is proximate to the electronic device 101 (e.g., a situation in which state information on the light receiver module is determined to be a "CLOSE" state). For another example, in the case that state information on the first light receiver module 421 and the second light receiver module 422 is switched from a "FAR" state to a "CLOSE" state, the processor 120 may identify that it is a situation in which an object is proximate to the electronic device 101. In the case that a light reception amount through a light receiver module exceeds a configured threshold value, status information on the light receiver module may be determined as a "CLOSE" state. In the case that a light reception amount through a light receiver module is less than a configured threshold value, state information on the light receiver module may be determined as a "FAR" state. According to an embodiment, the processor 120 may determine whether it is a situation in which an object is in proximity to the electronic device 101 based on the state information on the first light receiver module 421 and/or the state information on the second light receiver module 422 (an example of this is described in relation to FIGURE 8A).

According to another embodiment, the processor 120 may identify a first change amount for a first light reception amount and/or a second change amount for a second light reception amount, and may identify the relative movement and/or location of an object with respect to the electronic device 101, based on the first change amount and/or the second change amount. For example, in a situation in which the first light reception amount is less than the first threshold value and the second light reception amount is less than the second threshold value, a situation in which both the first light reception amount and the second light reception amount increase may be determined as a situation in which the object is in proximity to the electronic device 101 or the electronic device 101 is in proximity to the object.

If it is identified in operation 507 that an object is in proximity (e.g., proximate to) to the electronic device 101, in operation 509, the processor 120 may perform a function configured according to the proximity of the object (e.g., an inactive operation of a display module (e.g., the display module 160 in FIG. 1). For example, in the case that a user places a call receiver (e.g., the audio output device 214 in FIG. 2a) adjacent to an ear of the electronic device 101 for a call, the processor 120 may identify that an object (e.g., a human body or a part thereof such as an ear, and/or a thing) is proximate to the electronic device 101, and inactivate the display module 160 to turn off the screen of the electronic device 101.

In operation 507, in the case that the object is not proximate to the electronic device 101, the electronic device 101 may identify the light reception amount through the plurality of light receiver modules in operation 501. According to an embodiment, the electronic device 101 may periodically identify the light reception amount of the light received from the outside using a plurality of light receiver modules, and determine, based on the identified light reception amount, whether it is a situation in which the object is proximate to the electronic device 101.

According to an embodiment, the electronic device 101 may more accurately identify the proximity of the object to the electronic device 101 by using the sensor module 400 including a plurality of light receiver modules (e.g., the first light receiver module 421 and/or the second light receiver module 422), and perform the configured function in response to a situation in which the object is proximate to the electronic device 101. According to an embodiment, the electronic device 101 may reduce malfunctions of functions using the sensor module 400.

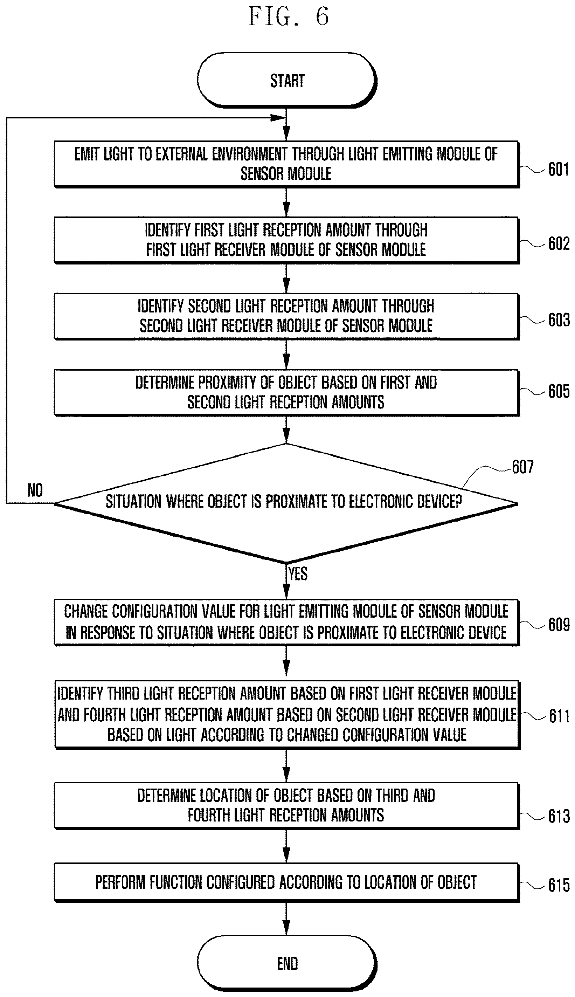

FIG. 6 is a flowchart illustrating a method of identifying whether an object is proximate to an electronic device using a plurality of light receiver modules and changing configuration for a light emitting module according to the proximity of an object according to various embodiments of the disclosure.

The electronic device in FIG. 6 (e.g., the electronic device 101 in FIG. 1) may be at least partially similar to the electronic device 200 in FIG. 2a or may further include other embodiments of the electronic device 101. It will be appreciated that one or more of the operations of FIG. 6 may be omitted, the order of one or more of the operations of FIG. 6 may be changed, and/or one or more other operations may be performed in addition to an operation of FIG. 6, as desired

According to an embodiment, the electronic device 101 may emit light to an external environment through a light emitting module (e.g., the light emitting module 410 in FIG. 4) included in the sensor module 400 (e.g., the sensor module 176 in FIG. 1, the sensor module 400 in FIG. 4, or a proximity sensor). The electronic device 101 may obtain the reflected light for the light emitted through a plurality of light receiver modules (e.g., the first light receiver module 421 and/or the second light receiver module 422 in FIG. 4), based on the light emitted. The electronic device 101 may determine a proximity of an object to the electronic device 101 based on the light reception amount of the obtained light. For example, the processor (e.g., the processor 120 in FIG. 1) of the electronic device 101 may identify the first light reception amount through the first light receiver module 421 and the second light reception amount through the second light receiver module 422. The processor 120 may determine a proximity of an object (e.g., the relative movement direction and location of the object with respect to the electronic device 101) based on the first and second light reception amounts. The processor 120 may change a configuration value (e.g., light emission configuration information) of the light emitting module 410 in response to a situation in which an object is proximate to the electronic device 101. For example, the processor 120 may adjust the intensity of light emitted through the light emitting module 410 to be stronger or change light emission configuration information to increase light emission time. The processor 120 may identify a third light reception amount through the first light receiver module 421 and a fourth light reception amount through the second light receiver module 422 based on the light source according to the changed configuration value. The processor 120 may determine the relative location of the object based on the third light reception amount and the fourth light reception amount, and may perform the function (e.g., an inactivation of a display module (e.g., the display module 160 in FIG. 1)) configured according to the relative location of the object. According to an embodiment, the electronic device 101 may repeatedly identify the movement and/or location of an object using a plurality of light receiver modules, and perform a configured function corresponding to the identified situation.

Operations 601 to 607 in FIG. 6 are substantially the same as operations 501 to 507 in FIG. 5, and descriptions of operations 601 to 607 are replaced with descriptions of operations 501 to 507 described above.

When it is identified in operation 607 that an object is in proximity (or proximate) to the electronic device 101, in operation 609 the processor 120 responds to a situation in which the object is in proximity to the electronic device 101, and may change a configuration value for the light emitting module 410 of the sensor module 400. For example, the first light receiver module 421 and the second light receiver module 422 are each in a state in which an orientation angle (e.g., an orientation view) is configured, and there may be an uncertainty distance (e.g., an uncertainty area) in which the proximity of an object may not be identified or accurately identified based on the configured orientation angle. According to an embodiment, a first uncertainty distance corresponding to the first light receiver module 421 and a second uncertainty distance corresponding to the second light receiver module 422 formed differently from the first uncertainty distance may exist. For example, in the case that at least a part of an object enters within the first uncertainty distance, it may be difficult for the processor 120 to determine the proximity of the object (e.g., difficult to accurately determine a location of the object relative to the electronic device 101) through/based on the first light receiver module 421. In the case that at least a part of the object enters within the second uncertainty distance, it may be difficult for the processor 120 to determine the proximity of the object (e.g., difficult to accurately determine a location of the object relative to the electronic device 101) through/based on the second light receiver module 422. According to an embodiment, the processor 120 may change a configuration value for the light emitting module 410 in order to identify the location of the object within an uncertainty distance.

According to the invention, the electronic device 101 responds to a situation in which an object is identified, detected or determined to be in proximity (e.g., is proximate) to the electronic device 101, and changes the configuration value for the light emitting module 410 (e.g., light emission configuration information (e.g., an intensity of light, an amount of light, a current value applied to the light emitting module 410, light emission time, and/or a number of pulses of light)) to a higher value. Changing the configuration value for the light emitting module 410 to a higher value/level may mean performing at least one operation of: an operation of configuring the intensity of light emitted to be higher, an operation of configuring a current value applied to the light emitting module 410 to be higher, an operation of configuring light emission time to be longer, and/or an operation of configuring the number of pulses of light emitted within a unit time to be increased. For example, the processor 120 may increase the current value supplied to the light emitting module 410 from a first value (e.g., about 10 mA) to a second value (e.g., about 20 mA), or increase the light emission time of the light emitting module 410 from a first value (e.g., about 100 µs) to a second value (e.g., about 200 µs), or increase the number of light pulses emitted within a unit time from a first value (e.g., 2 pulses) to a second value (e.g., 4 pulses). According to an embodiment, the above described current value, light emission time, and/or number of light pulses are not limited to specific values. According to the invention, when it is identified as a situation in which an object is proximate to the electronic device 101, the electronic device 101 changes a configuration value of light emitted within a unit time to a higher value, thereby increasing the recognition sensitivity of the location of the object. According to an embodiment, in the case that the configuration value for the light emitting module 410 is changed to a higher value, first uncertainty distance and the second uncertainty distance, which may correspond to a distance within which less reflected light is received by the first light receiver module 421 and the second light receiver module 422, respectively, may be reduced. For example, the uncertainty distance may mean a distance at which light sensitivity (e.g., an amount of light received) is lowered within a configured threshold value. For example, as the intensity of light emitted increases, the intensity of light received also increases, and thus the uncertainty distance may be relatively reduced. Reduction of the uncertainty distance may mean that a detectable distance of an object through the first light receiver module 421 and a detectable distance of an object through the second light receiver module 422 is extended.

In operation 611, the processor 120 may identify the third light reception amount through the first light receiver module 421 and the fourth light reception amount through the second light receiver module 422 based on the light source according to the changed configuration value (e.g., light emitted with the changed configuration value). For example, as the configuration value of light emitted is changed to a higher level, the amount of light received through the first light receiver module 421 and the second light receiver module 422 may increase, and the range of the uncertainty distance resulting from the low sensitivity of the light (e.g., reduced amount of incoming or incident light) for the first uncertainty distance according to the first light receiver module 421 and the second uncertainty distance according to the second light receiver module 422 may be reduced (as discussed above). As the range of the uncertainty distance decreases, the processor 120 may more accurately identify the location of the object in a relatively wide range.

In operation 613, the processor 120 may determine the location of the object based on the third and fourth light reception amounts. For example, the processor 120 may at least partially identify an object entering within an uncertainty distance.

In operation 615, the processor 120 may perform a function (e.g., the inactive operation of a display module (e.g., the display module 160 in FIG. 1) configured according to the location of an object. According to an embodiment, in response to a specific event (e.g., a call reception event), the electronic device 101 may use a plurality of light receiver modules to identify proximity of an object to the electronic device 101 (e.g., to identify that the object is proximate or close). For example, in the case that a user places a call receiver of the electronic device 101 (e.g., the audio output device 214 in FIG. 2a) adjacent to the ear for a call, the processor 120 may identify that an object (e.g., a human body and/or a thing) is in proximity to the electronic device 101, and deactivate (e.g., make inactive) the display module 160 to perform an operation of turning off the screen of the electronic device 101. According to an embodiment, the electronic device 101 may more accurately identify the location of the object, and may reduce malfunction operation of functions (e.g., active/inactive operations of the display module 160) using the sensor module 400. A user's convenience for the electronic device 101 may be improved.

According to an embodiment, the electronic device 101 may emit light to an external environment through the light emitting module 410 included in the sensor module 400, and obtain reflected light (i.e., the reflected light at least partly resulting from reflection of the emitted light) through the sensor module 400 including a plurality of light receiver modules (e.g., the first light receiver module 421 and/or the second light receiver module 422). The electronic device 101 may measure a first light reception amount of light obtained through the first light receiver module 421 and a second light reception amount of light obtained through the second light receiver module 422. The electronic device 101 may determine a proximity of an object to the electronic device 101 based on the measured first light reception amount and/or second light reception amount. The electronic device 101 may change light emission configuration information for the light emitting module 410 in response to a situation in which an object moves adjacent to the electronic device 101, and more precisely identify the location of an object based on the light with the changed light emission configuration information. The electronic device 101 can more accurately identify a situation in which an object is in proximity (e.g., proximate) to the electronic device 101 and, in response to this, perform a configured function. According to an embodiment, the electronic device 101 may reduce malfunction operation of functions using the sensor module 400 and improve user convenience.

According to another embodiment, the processor 120 may identify a first change amount of the first light reception amount for the first light receiver module 421 (e.g., a change in the amount of light received through the first light receiver module 421) and a second change amount of the second light reception amount for the second light receiver module 422 (e.g., a change in the amount of light received through the second light receiver module 422). For example, the processor 120 may identify the first change amount of the first light reception amount for the first light receiver module 421 and the second change amount of the second light reception amount for the second light receiver module 422 for a predetermined period of time. The processor 120 may determine a proximity of an object to the electronic device 101 based on the first change amount and the second change amount. For example, a situation in which both the first light reception amount and the second light reception amount increase (e.g., the first change amount (+) and the second change amount (+)) may be a first situation in which the electronic device 101 and the object are close to each other, e.g., a case where the object moves closer to the electronic device 101 but remains outside of the first uncertainty distance and the second uncertainty distance. For another example, a situation in which only the first light reception amount decreases (e.g., the first change amount (-), the second change amount (+)) may be a second situation in which an object enters within, or moves into, the first uncertainty distance. For another example, in a situation in which the first and second light reception amounts increase, a situation in which only the second light reception amount decreases (e.g., the first change amount (+), the second change amount (-)) may be a third situation in which the object enters within, or moves into, the second uncertainty distance. For another example, in the second situation and the third situation, a situation in which both the first light reception amount and the second light reception amount decrease (e.g., the first change amount (-), the second change amount (-)) may be a fourth situation in which the object and the electronic device 101 are close to each other to such an extent that it is difficult for the electronic device 101 to determine the location of the object, e.g., where the object enters within, or moves into, the first uncertainty distance and the second uncertainty distance. According to another embodiment, the processor 120 may identify the above-mentioned first situation, second situation, third situation, and/or fourth situation, and determine the relative location of the object with respect to the electronic device 101. For example, the processor 120 may determine whether the object is located within an uncertainty distance(e.g., a first uncertainty distance or a second uncertainty distance) based on the first change amount and the second change amount.

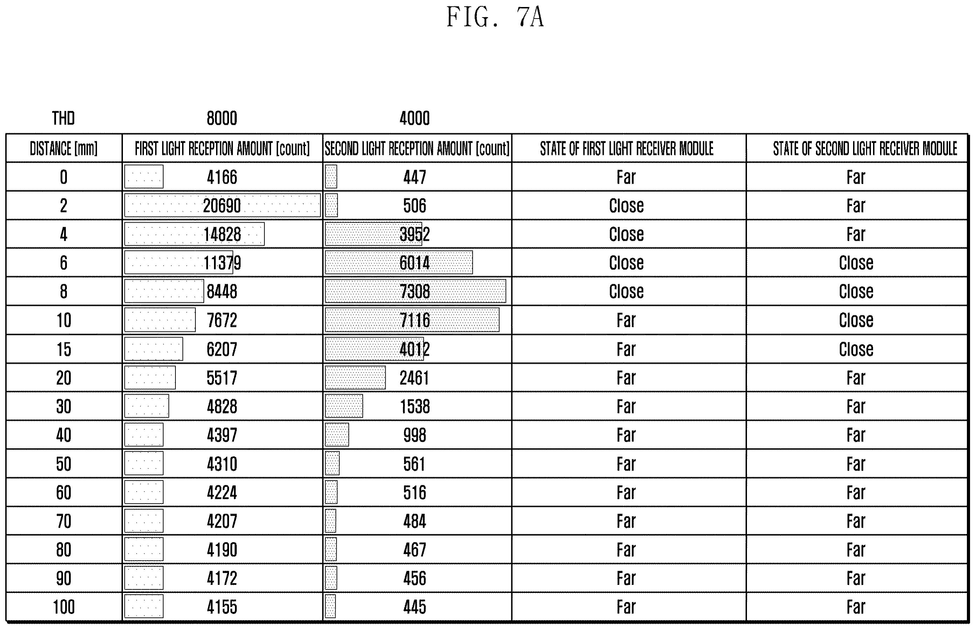

FIG. 7a is a table illustrating the light reception amount (e.g., a first light reception amount) and state information for a first light receiver module and the light reception amount (e.g., a second light reception amount) and state information of a second light receiver module, corresponding to a proximity distance of an object to an electronic device according to various embodiments of the disclosure.

The table of FIG. 7a illustrates the light reception amounts (e.g., a first light reception amount, a second light reception amount) for a first light receiver module (e.g., the first light receiver module 421 in FIG. 4) and a second light receiver module (e.g., the second light receiver module 422 in FIG. 4) according to a distance (mm) between an electronic device (e.g., the electronic device 101 in FIG. 1) and an object. As discussed above, a light reception amount may be related to an amount of light received (e.g., detected) by a light reception module, where the received light includes light that was emitted by the light emitting module and reflected (e.g., by an object in proximity to the electronic device 101) so as to be received at the light reception module. For example, the first light receiver module 421 may configure a first threshold value to about 8000 (count), and the second light receiver module 422 may configure a second threshold value to about 4000 (count). For example, the count unit for the light reception amount may be defined as a value obtained by digitizing signals collected by a sensor (e.g., the first light receiver module 421, the second light receiver module 422). For example, the count unit value may be determined in proportion to a current value and/or an intensity of light (e.g., beam). The first threshold value may be determined or set (e.g., predefined) based on a separation distance between a light emitting module (e.g., the light emitting module 410 in FIG. 4) and the first light receiver module 421, and the second threshold value may be determined or set (e.g., predefined) based on a separation distance between the light emitting module 410 and the second light receiver module 422. The separation distance (e.g., a first distance) between the light emitting module 410 and the first light receiver module 421 is relatively shorter than the separation distance (e.g., a second distance) between the light emitting module 410 and the second light receiver module 422, and thus, the first light reception amount through the first light receiver module 421 may be relatively greater than the second light reception amount based on a relative location of an object reflecting light to the first light receiver module 421 and the second light receiver module 422, such as when an object is located above the light emitting module 410 or closer to the first light receiver module 421 than to the second light receiver module 422. Accordingly, in some examples the first threshold value corresponding to the first light receiver module 421 may be configured relatively greater than the second threshold value corresponding to the second light receiver module 422.

With reference to FIG. 7a, when a distance (e.g., in mm) between the first light receiver module 421 and an object is about 2 to 8 mm, the first light reception amount through the first light receiver module 421 exceeds a first threshold value (e.g., about 8000 (count)), and the state information of the first light receiver module 421 may be switched from a "FAR" state to a "CLOSE" state. For example, the processor 120 may identify a proximity of an object to the electronic device 101 based on the first light reception amount through the first light receiver module 421, and may identify that the state information of the first light receiver module 421 is switched from the "FAR" state to the "CLOSE" state in the case that the first light reception amount exceeds the first threshold value. According to an embodiment, a situation in which a distance (e.g., in mm) between the first light receiver module 421 and an object becomes closer than 2 mm means a situation in which the object enters within the first uncertainty distance with respect to the first light receiver module 421. For example, when only the first light receiver module 421 is used, the processor 120 may have difficulty determining the location of an object entering within a first uncertainty distance. The first uncertainty distance may be determined based on the orientation angle of the light emitting module 410, the orientation angle of the first light receiver module 421, and a separation distance between the light emitting module 410 and the first light receiver module 421.

With reference to FIG. 7a, when a distance (e.g., in mm) between the second light receiver module 422 and an object is about 6 to 15 mm, a second light reception amount through the second light receiver module 422 exceeds a second threshold value (e.g., about 4000 (count)), and the state information of the second light receiver module 422 may be switched from a "FAR" state to a "CLOSE" state. For example, the processor 120 may identify a proximity of an object to the electronic device 101 based on a second light reception amount through the second light receiver module 422, and identify that the state information of the second light receiver module 422 is switched from a "FAR" state to a "CLOSE" state in the case that the second light reception amount exceeds a second threshold value. According to an embodiment, a situation in which a distance (e.g., in mm) between the second light receiver module 422 and an object becomes closer than 6 mm means a situation in which the object enters within a second uncertainty distance with respect to the second light receiver module 422. For example, when only the second light receiver module 422 is used, the processor 120 may have difficulty to determine the location of an object entering within the second uncertainty distance. The second uncertainty distance may be determined based on the orientation angle of the light emitting module 410, the orientation angle of the second light receiver module 422, and the distance between the light emitting module 410 and the second light receiver module 422.

According to an embodiment, the processor 120 may use a plurality of light receiver modules (e.g., the first light receiver module 421 and the second light receiver module 422) to identify a light reception amount (e.g., a first light reception amount and/or a second light reception amount), and identify a proximity of an object to the electronic device 101 based on the first light reception amount and the second light reception amount. By measuring a plurality of light reception amounts through a plurality of light receiver modules, the processor 120 can more accurately identify the location of an object. According to an embodiment, the processor 120 may identify whether it is a situation in which an object is proximate to the electronic device 101 or an object is moving away from the electronic device 101 based on the state information (e.g., a "FAR" state, a "CLOSE" state) of the first light receiver module 421 and the state information (e.g., a "FAR" state, a "CLOSE" state) of the second light receiver module 422.

According to another embodiment, the processor 120 may identify a first change amount for a first light reception amount and a second change amount for a second light reception amount for a predetermined period of time, and determine, based on the first change amount and the second change amount, the proximity of an object. For example, the processor 120 may determine whether an object is located within an uncertainty distance (e.g., a first uncertainty distance or a second uncertainty distance) based on the first change amount and the second change amount.

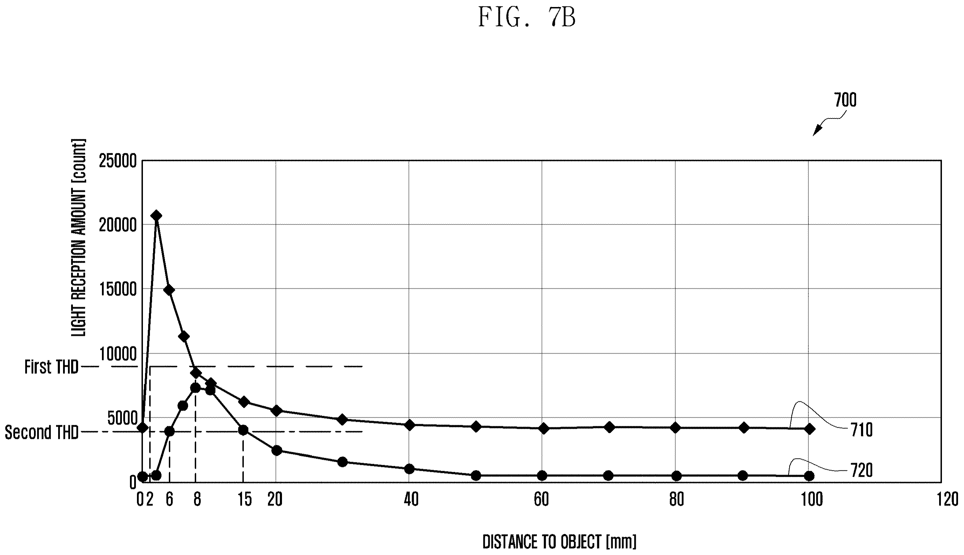

FIG. 7b is a graph 700 illustrating a light reception amount corresponding to a distance to an object based on the table of FIG. 7a according to various embodiments of the disclosure.

With reference to FIG. 7b, a graph 700 includes a first line 710 representing a first light reception amount through the first light receiver module 421 and a second line 720 representing a second light reception amount through the second light receiver module 422 based on the table of FIG. 7a. For example, in a first interval (e.g., about 2 to 8 mm) in which the first light reception amount along the first line 710 exceeds a first threshold value (e.g., First THD, about 8000 (count)), the processor 120 may identify that the object is in proximity to (e.g., proximate to) the first light receiver module 421. In the first interval, the state information of the first light receiver module 421 may be switched from a "FAR" state to a "CLOSE" state. For example, in a second interval (e.g., about 6 to 15 mm) in which the second light reception amount along the second line 720 exceeds a second threshold value (e.g., Second THD, about 4000 (count)), the processor 120 may identify that an object is proximate to the second light receiver module 422. In the second interval, the state information of the second light receiver module 422 may be switched from a "FAR" state to a "CLOSE" state.

According to an embodiment, the processor 120 may determine whether an object is in proximity to (e.g., proximate to) the electronic device 101 or an object is moving away from or towards the electronic device 101 based on the state information (e.g., a "FAR" state, a "CLOSE" state) of the first light receiver module 421 and the state information (e.g., a "FAR" state, a "CLOSE" state) of the second light receiver module 422. According to an embodiment, the electronic device 101 may use a plurality of light receiver modules to determine a proximity of an object, and relatively more accurately determine the location of an object than a case using a single light receiver module.

FIG. 8a is a view illustrating states of a first light receiver module and a second light receiver module corresponding to a relative movement direction of an object with respect to an electronic device according to various embodiments of the disclosure.

The electronic device in FIG. 8a (e.g., the electronic device 101 in FIG. 1) may be at least partially similar to the electronic device 200 in FIG. 2a or may further include other embodiments of the electronic device 101.

FIG. 8a illustrates the state information (e.g., a "FAR" state, a "CLOSE" state) of a plurality of light receiver modules (e.g., the first light receiver module 421 and the second light receiver module 422) according to a location between a sensor module (e.g., the sensor module 400 in FIG. 4) and an object 800. The sensor module 400 may include one light emitting module (e.g., the light emitting module 410 in FIG. 4), the first light receiver module 421 and/or the second light receiver module 422. The first light receiver module 421 and the second light receiver module 422 may be switched to one state (e.g., state information) of a "FAR" state and a "CLOSE" state based on the location and movement direction of the object. For example, the electronic device (e.g., the electronic device 101 in FIG. 1) may configure a first threshold value corresponding to the first light receiver module 421 and a second threshold value corresponding to the second light receiver module 422. For example, in a situation in which a first light reception amount through the first light receiver module 421 exceeds a first threshold value, the state information of the first light receiver module 421 may be switched from a "FAR" state to a "CLOSE" state. In a situation in which a second light reception amount through the second light receiver module 422 exceeds a second threshold value, the state information of the second light receiver module 422 may be switched from a "FAR" state to a "CLOSE" state.

According to an embodiment, based on the state information of the first light receiver module 421 and the state information of the second light receiver module 422 (e.g., based on there being a change or no change in the state information of the first light receiver module 421 and/or the state information of the second light receiver module 422), the electronic device 101 may identify whether an object is in proximity to or moving towards the electronic device 101 along a first direction 810, or whether an object is moving away from the electronic device 101 along a second direction 820. For example, in a situation in which the state information of the first light receiver module 421 and second light receiver module 422 are both in a "FAR" state, if the state information of the second light receiver module 422 is first switched from a "FAR" state to a "CLOSE" state, the electronic device 101 may identify that an object approaches to the electronic device 101 from location A to location B along the first direction 810. For another example, in a situation in which both the state information of the first light receiver module 421 and second light receiver module 422 are both in a "CLOSE" state, if the state information of the first light receiver module 421 is switched first from a "CLOSE" state to a "FAR" state, the electronic device 101 may identify that an object is moving away from the electronic device 101 from location C to location B along the second direction 820.

According to an embodiment, the electronic device 101 uses the sensor module 400 including a plurality of light receiver modules (e.g., the first light receiver module 421 and the second light receiver module 422) to identify the location of an object and the relative movement direction of the object with respect to the electronic device 101 more accurately. With reference to FIG. 8a, in a situation in which the state information of the first light receiver module 421 and second light receiver module 422 are both in a "CLOSE" state, a first situation in which the first light receiver module 421 maintains a "CLOSE" state while the second light receiver module 422 is switched from a "CLOSE" state to a "FAR" state (e.g., a situation in which an object moves from location C to location D), and a second situation in which the first light receiver module 421 is also switched from a "CLOSE" state to a "FAR" state (e.g., a situation in which an object moves from location D to location E) may occur after the first situation. For example, the first situation may include a situation in which an object moves within a second uncertainty distance with respect to the second light receiver module 422 (e.g., a situation in which an object moves from location C to location D). The second situation may include a situation in which an object moves within a first uncertainty distance with respect to the first light receiver module 421 (e.g., a situation in which an object moves from location D to location E). According to an embodiment, the electronic device 101 may identify the relative movement and/or location of an object relative to the device 101, based on a first change in state information on the first light receiver module 421 and/or a second change in state information on the second light receiver module 422.

According to an embodiment, even if both the state information of the first light receiver module 421 and the state information of the second light receiver module 422 are identified to be a "FAR" state, the electronic device 101 may detect that an object moves within an uncertainty distance (e.g., a first uncertainty distance and/or a second uncertainty distance). The electronic device 101 may sequentially identify the state information on the first light receiver module 421 and the second light receiver module 422, and may determine that an object moves within an uncertainty distance (e.g., a first uncertainty distance and/or the second uncertainty distance), based on the changed order of the state information. Even in a situation where an object moves within an uncertainty distance and both the first light receiver module 421 and the second light receiver module 422 are converted to a "FAR" state, the electronic device 101 may identify the location of an object and the relative movement direction of an object with respect to the electronic device 101, and continuously perform the configured function (e.g., inactivation or turn off of the display module 160), in response to a situation in which an object is in proximity (e.g., proximate) to the electronic device 101.

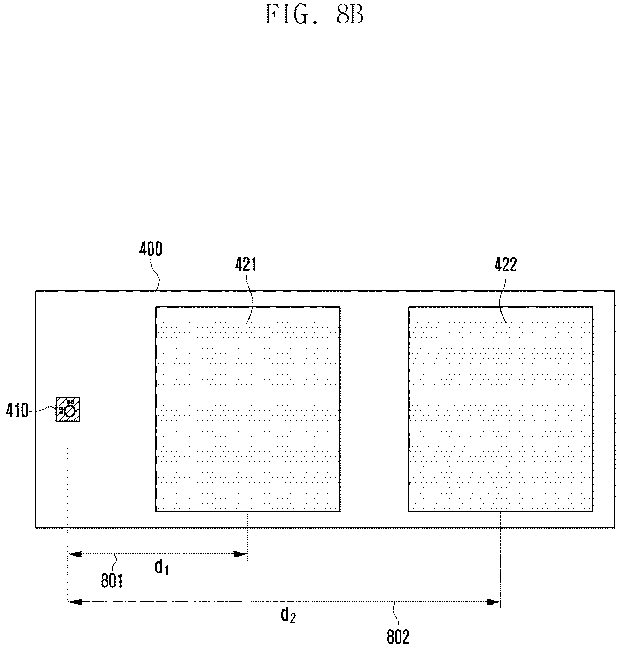

FIG. 8b is a view illustrating a sensor module in which a first light receiver module spaced apart from a light emitting module by a first distance (d1) and a second light receiver module spaced apart from the light emitting module by a second distance (d2) are disposed in a line based on the light emitting module according to various embodiments of the disclosure. It will be appreciated that, in various embodiments, the first light receiver module and the second light receiver module may instead be offset from one another in relation to the light emitting module.

The sensor module in FIG. 8b (e.g., the sensor module 400 in FIG. 4) may be at least partially similar to the sensor module 204 in FIG. 2a, or may further include other embodiments of the sensor module 400.

With reference to FIG. 8b, the sensor module 400 may include one light emitting module (e.g., the light emitting module 410 in FIG. 4) and a plurality of light receiver modules (e.g., the first light receiver module 421 and/or the second light receiver module 422 in FIG. 4). The light emitting module 410, the first light receiver module 421 and/or the second light receiver module 422 may be substantially disposed side by side in a line. The light emitting module 410 and the first light receiver module 421 may be disposed apart from each other by a first distance (d1) 801, and the light emitting module 410 and the second light receiver module 422 may be disposed apart from each other by a second distance (d2) 802. For example, the second distance (d2) 802 may be relatively longer than the first distance (d1) 801. Based on the position of the light emitting module 410, the second light receiver module 422 may be disposed farther than the first light receiver module 421. According to various embodiments, the second light receiver module 422 is not limited to being disposed farther than the first light receiver module 421 with respect to the light emitting module 410.

According to an embodiment, each of the light emitting module 410, the first light receiver module 421, and/or the second light receiver module 422 may be designed to have an orientation angle. According to an embodiment, based on the orientation angle of the light emitting module 410, the orientation angle of the first light receiver module 421, and the first distance (d1) 801, a first uncertainty distance with respect to the first light receiver module 421 may exist. For example, in the case that an object is located within the first uncertainty distance, it may be difficult for the first light receiver module 421 to detect (e.g., accurately detect) the location, existence or proximity of an object.

According to an embodiment, based on the orientation angle of the light emitting module 410, the orientation angle of the second light receiver module 422, and the second distance (d2) 802, a second uncertainty distance with respect to the second light receiver module 422 may exist. For example, in the case that an object is located within the second uncertainty distance, it may be difficult for the second light receiver module 422 to detect (e.g., accurately detect) the location, existence or proximity of an object.

According to an embodiment, in the case that the orientation angle of the first light receiver module 421 and the orientation angle of the second light receiver module 422 are substantially the same, the first uncertainty distance of the first light receiver module 421 disposed relatively close to the light emitting module 410 may be configured shorter than the second uncertainty distance of the second light receiver module 422.

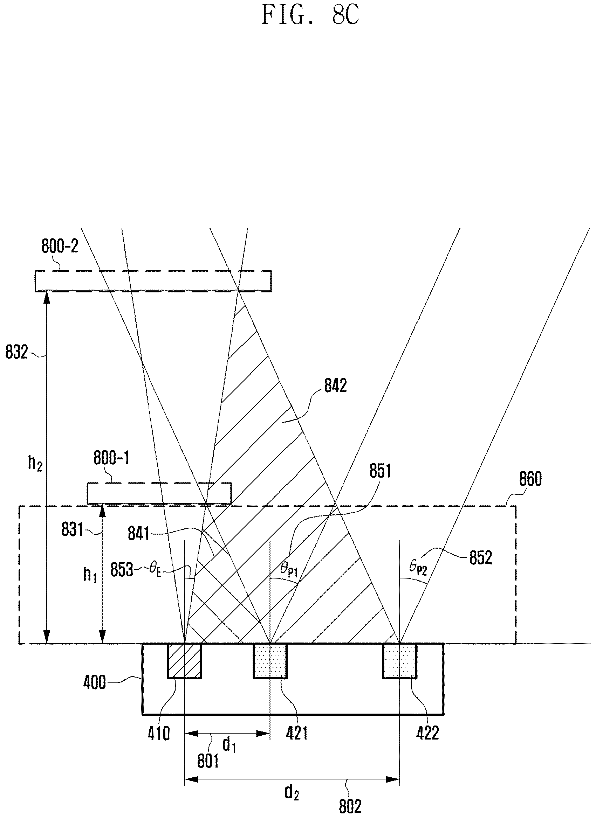

FIG. 8c is a view illustrating a first uncertainty distance for the first light receiver module of FIG. 8b and a second uncertainty distance for the second light receiver module of FIG. 8b according to various embodiments of the disclosure.

The sensor module in FIG. 8c (e.g., the sensor module 400 in FIG. 4) may be at least partially similar to the sensor module 204 in FIG. 2a, or may further include other embodiments of the sensor module 400. In the sensor module 400 in FIG. 8c, as shown in FIG. 8b, the light emitting module 410 and the first light receiver module 421 may be disposed apart from each other by a first distance (d1) 801, and the light emitting module 410 and the second light receiver module 422 may be disposed apart from each other by a second distance (d2) 802.

With reference to FIG. 8c, the first light receiver module 421 may receive light (e.g., beam) based on the first orientation angle 851, and the second light receiver module 422 may receive light based on the second orientation angle 852. The light emitting module 410 may emit light to an outside based on a third orientation angle 853.

With reference to FIG. 8c, in the case that an object is located at a first position 800-1 away from the sensor module 400 by h1 831, a first light reception amount through the first light receiver module 421 is substantially equal to a first threshold value. For example, in the case that an object is relatively proximate to the sensor module 400 at the first position 800-1, the first light reception amount through the first light receiver module 421 may decrease. According to an embodiment, in the case that an object is more proximate to (i.e., closer to) the sensor module 400 than at the first position 800-1 (e.g., a case in which an object moves within the first uncertainty distance 831 (i.e., the first unidentified distance 831) with respect to the first light receiver module 421 (i.e., closer than the first position 800-1)), a first light reception amount through the first light receiver module 421 becomes smaller than a first threshold value, and the electronic device 101 may have difficulty to detect the location or proximity of an object by using the first light receiver module 421. According to an embodiment, a first unidentified area 841 based on the light emitting module 410 and the first light receiver module 421 may exist. For example, the first unidentified area 841 may be formed based on the first uncertainty distance (h1) 831.

With reference to FIG. 8c, in the case that an object is located at a second position 800-2 away from the sensor module 400 by h2 832, a second light reception amount through the second light receiver module 422 may be substantially equal to a second threshold value. For example, in the case that an object is relatively proximate to the sensor module 400 at the second position 800-2, a second light reception amount through the second light receiver module 422 may decrease.

According to an embodiment, in the case that an object is more proximate to (i.e., closer to) the sensor module 400 at the second position 800-2 (e.g., a case in which an object moves within the second uncertainty distance 832 (i.e., the second unidentified distance 832) with respect to the second light receiver module 422 (i.e., closer than the second position 800-2)), a second light reception amount through the second light receiver module 422 becomes smaller than a second threshold value, and the electronic device 101 may have difficulty to detect the location or proximity of an object using the second light receiver module 422. According to an embodiment, a second unidentified area 842 based on the light emitting module 410 and the second light receiver module 422 may exist. For example, the second unidentified area 842 may be formed based on the second uncertainty distance (h2) 832.

With reference to FIG. 8c, based on the first uncertainty distance 831 and the second uncertainty distance 832, a third unidentified area 860 corresponding to the relatively short first uncertainty distance 831 may be formed. For example, the third unidentified area 860 may be an area in which it is difficult to detect the location or proximity of an object through the first light receiver module 421 and/or the second light receiver module 422. The third unidentified area 860 may be an area in which it is difficult to detect the location or proximity of an object due to low sensitivity of light received.

According to an embodiment, the electronic device 101 may identify a first light reception amount through the first light receiver module 421 and a second light reception amount through the second light receiver module 422, and identify, based on the first amount of light and the second light reception amount, the location of the object and the relative movement direction of the object with respect to the electronic device 101. For example, the electronic device 101 may detect a situation in which an object moves within an uncertainty distance (e.g., the first uncertainty distance 831 or the second uncertainty distance 832) based on a first light reception amount and/or a second light reception amount. For example, the electronic device 101 may identify whether the object is proximate to the sensor module 400 or is moving away from the sensor module 400 from the first position 800-1 as a reference, based on the first light reception amount and the second light reception amount. For another example, the electronic device 101 may identify whether an object is proximate to or moving away from the sensor module 400 from the second position 800-2 as a reference, based on the first light reception amount and the second light reception amount.

According to the invention, the electronic device 101 identifies a situation in which an object is relatively proximate to the electronic device 101, and changes the light emission configuration information of the light emitting module 410 in response to the identified proximity state of the object to the electronic device 101. For example, the electronic device 101 may change light emission configuration information so that the intensity or amount of light emitted through the light emitting module 410 increases. For example, the electronic device 101 may configure a current value applied to the light emitting module 410 to be high. According to an embodiment, the electronic device 101 may increase the first light reception amount and the second light reception amount by changing an intensity of light emitted to be stronger, and at least partially identify the location or proximity of an object even in the case that the object is located within an uncertainty distance (e.g., the first uncertainty distance 831, the second uncertainty distance 832).

According to another embodiment, the electronic device 101 may identify a first change amount for a first amount of light reception and a second change amount for a second amount of light reception for a predetermined period of time, and determine a proximity of an object based on the first change amount and the second change amount. For example, the processor 120 may determine whether an object is located within an uncertainty distance (e.g., the first uncertainty distance 831 or the second uncertainty distance 832) based on the first change amount and the second change amount.

According to another embodiment, in the electronic device 101, at least one of the first light receiver module 421 and/or the second light receiver module 422 may be implemented using an image sensor (e.g., the image sensor 430 in FIG. 4) of a camera module (e.g., the camera module 180 in FIG. 4). The electronic device 101 may use a component that performs a function of receiving light (e.g., beam) from an external environment as a light receiver module.

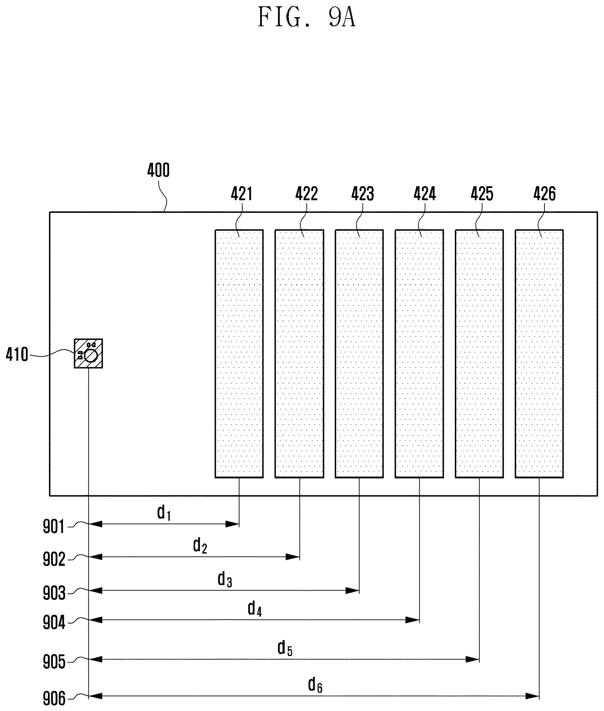

FIG. 9a is a view for explaining a sensor module including one light emitting module and a plurality of light receiver modules according to various embodiments of the disclosure.

The sensor module in FIG. 9a (e.g., the sensor module 400 in FIG. 4) may be at least partially similar to the sensor module 204 in FIG. 2a, or may further include other embodiments of the sensor module 400.

The sensor module 400 in FIG. 9a may include one light emitting module 410 and a plurality of light receiver modules 421, 422, 423, 424, 425, and 426. With reference to FIG. 9a, the light emitting module 410 and the first light receiver module 421 may be disposed apart from each other by a first distance (d1) 901, and the light emitting module 410 and the second light receiver module 422 may be disposed apart by a second distance (d2) 902, and the light emitting module 410 and the third light receiver module 423 may be disposed apart from each other by a third distances (d3) 903. In addition, the light emitting module 410 and the fourth light receiver module 424 may be disposed apart from each other by a fourth distance (d4) 904, the light emitting module 410 and the fifth light receiver module 425 may be disposed apart by a fifth distance (d5) 905, and the light emitting module 410 and the sixth light receiver module 426 may be disposed apart from each other by a sixth distance (d6) 906. According to various embodiments, the sensor module may be constituted with at least two of the light receiver modules 421, 422, 423, 424, 425, and 426 and is not limited to a structure arranged in a line.

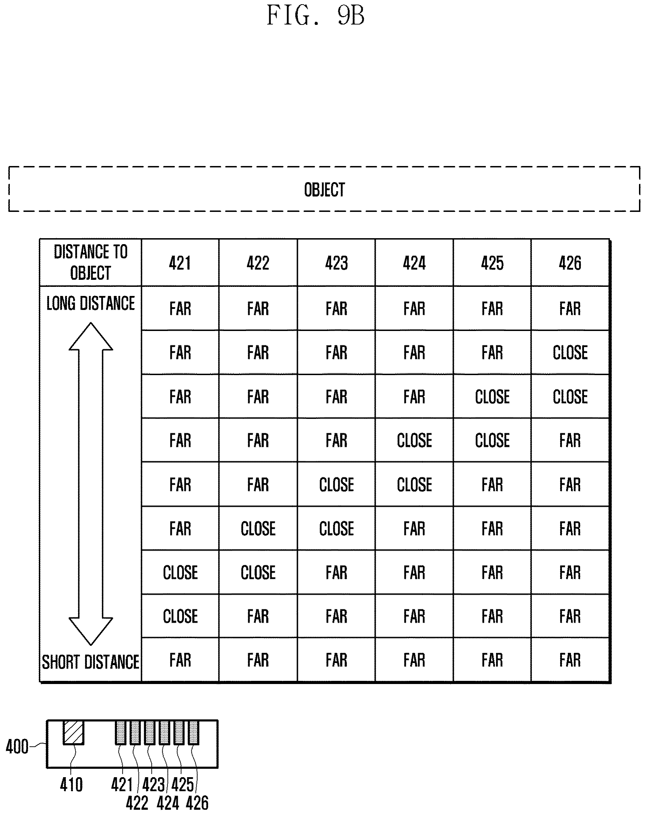

FIG. 9b is a table illustrating state information of the plurality of light receiver modules of FIG. 9a, corresponding to a distance between an electronic device and an object according to various embodiments of the disclosure.

The sensor module 400 in FIG. 9b may have substantially the same structure as the sensor module 400 in FIG. 9a. With reference to FIG. 9b, the plurality of light receiver modules 421, 422, 423, 424, 425, and 426 has substantially the same orientation angle, and as the distance to the light emitting module 410 increases, a detection range for an object may be formed further. For example, the first light receiver module 421 may have a detection range for an object shorter than a detection range for an object of the sixth light receiver module 426. The first light receiver module 421 may detect a proximity of an object at a point where the object is located closer to the electronic device 101 compared to the sixth light receiver module 426. Conversely, the sixth light receiver module 426 may detect a proximity of an object at a point where the object is far from the electronic device 101 compared to the first light receiver module 421. Accordingly, in various examples, it will be appreciated that a detection range for an object corresponding to a light receiver module (e.g., one of the first to sixth light receiver modules 421, 422, 423, 424, 425, and 426) may be related to an uncertainty distance corresponding to said light receiver module. For example, a lower limit of a detection range of a light receiver module, being a range in which accurate object detection is possible, may correspond to an uncertainty distance of the light receiver module.

According to an embodiment, in the case that the light emitted from the light emitting module 410 is reflected by an object and received by a plurality of light receiver modules, the electronic device 101 may identify the location and movement direction of the object based on a light reception amount. The electronic device 101 may identify that the object is proximate to the electronic device 101 in the case that the light reception amount exceeds a configured threshold value. For example, in the case that the first light reception amount of the first light receiver module 421 exceeds a configured threshold value, the state information on the first light receiver module 421 may be switched from a "FAR" state to a "CLOSE" state (e.g., assuming the first light receiver module 421 had previously detected a light reception amount below the configured threshold value). With reference to FIG. 9b, in the case that the state information on at least two light receiver modules among the plurality of light receiver modules 421, 422, 423, 424, 425, and 426 is identified, the relative location of an object with respect to the electronic device 101 can be identified. With reference to FIG. 9b, a detection range of the object for the first light receiver module 421 may be formed relatively closer to the sensor module 400 than a detection range for the sixth light receiver module 426.

According to an embodiment, the electronic device 101 uses the sensor module 400 including the plurality of light receiver modules 421, 422, 423, 424, 425, and 426 to identify the location of the object and the relative movement (e.g., movement direction) of the object with respect to the electronic device 101 more accurately.

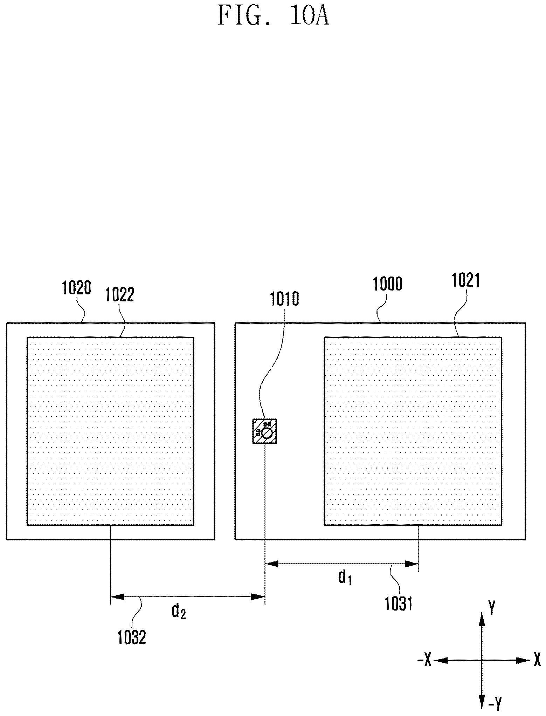

FIG. 10a is a view illustrating a first light receiver module spaced to the right (e.g., the x direction) by the same distance (e.g., a first distance (d1)) and a second light receiver module spaced to the left (e.g., the -x direction) by substantially the same distance (e.g., a second distance (d2)) with respect to a light emitting module according to various embodiments of the disclosure.

A sensor module 1000 in FIG. 10a (e.g., the sensor module 400 in FIG. 4) may be at least partially similar to the sensor module 204 in FIG. 2a, or may further include other embodiments of the sensor module 400.

With reference to FIG. 10a, the sensor module 1000 may include one light emitting module 1010 (e.g., the light emitting module 410 in FIG. 4) and a plurality of light receiver modules (e.g., a first light receiver module 1021 (e.g., the first light receiver module 421 in FIG. 4)), a second light receiver module 1022 (e.g., the second light receiver module 422 in FIG. 4)) With reference to FIG. 10a, although the light emitting module 1010 and the first light receiver module 1021 are illustrated as one component and the second light receiver module 1022 is illustrated as an independent component 1020, the sensor module 1000 may be constituted to include the first light receiver module 1021 and the second light receiver module 1022. According to another embodiment, at least one of the first light receiver module 1021 and the second light receiver module 1022 may be implemented using an image sensor (e.g., the image sensor 430 in FIG. 4) of a camera module (e.g., the camera module 180 in FIG. 4). With reference to FIG. 10a, the light emitting module 1010, the first light receiver module 1021, and the second light receiver module 1022 may be substantially disposed side by side along the x-axis, but are not limited thereto.

With reference to FIG. 10a, the first light receiver module 1021 may be disposed apart from the light emitting module 1010 in the x direction by a first distance (d1) 1031, and the second light receiver module 1022 may be disposed apart from the light emitting module 1010 in the -x direction by a second distance (d2) 1032. In various examples, the first distance (d1) 1031 and the second distance (d2) 1032 may be substantially the same distance.

According to an embodiment, the first light receiver module 1021 and the second light receiver module 1022 may be disposed apart from each other by substantially the same distance from the light emitting module 1010, and the first orientation angle of the first light receiver module 1021 and the second orientation angle of the second light receiver module 1022 may be configured to be different from each other.

According to an embodiment, based on the orientation angle of the light emitting module 1010, the orientation angle of the first light receiver module 1021, and the first distance (d1) 1031, a first uncertainty distance for the first light receiver module 1021 may exist. According to an embodiment, based on the orientation angle of the light emitting module 1010, the orientation angle of the second light receiver module 1022, and the second distance (d2) 1032, a second uncertainty distance for the second light receiver module 1022 may exist. According to an embodiment, a threshold value (e.g., a first threshold value, a second threshold value) for detecting the location of an object is configured, and in the case that a light reception amount through a light receiver module exceeds the configured threshold value, it may be determined that an object is in proximity (e.g., proximate) to the electronic device 101. For example, in the case that a light reception amount through the first light receiver module 1021 is less than the first threshold value, the processor 120 may determine that the object is located within a first uncertainty distance. For example, in the case that a light reception amount through the second light receiver module 1022 is less than a second threshold, the processor 120 may determine that an object is located within a second uncertainty distance. The uncertainty distance (e.g., a first uncertainty distance, a second uncertainty distance) corresponds to a distance at which a light reception amount is less than or equal to a configured threshold value, and in the case that an object, or at least a part thereof, is located within the uncertainty distance, it may be difficult for the electronic device 101 to determine the location of the object. For example, the first uncertainty distance may be a distance at which it may be difficult to detect an object through the first light receiver module 1021, and the second uncertainty distance may be a distance at which it may be difficult to detect an object through the second light receiver module 1022.

According to an embodiment, in the case that the first distance (d1) 1031 and the second distance (d2) 1032 are substantially the same, an uncertainty distance for a light receiver module for which an orientation angle is configured to be relatively large may be configured to be shorter than an uncertainty distance for a light receiver module for which an orientation angle is configured to be relatively to be small.

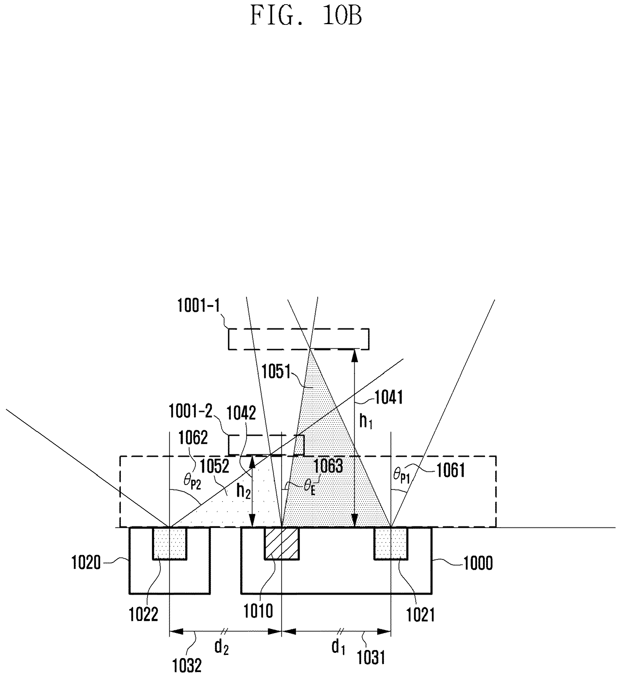

FIG. 10b is a view illustrating the first uncertainty distance 1041 for the first light receiver module 1021 of FIG. 10a and the second uncertainty distance 1042 for the second light receiver module 1022 of FIG. 10a according to various embodiments of the disclosure.

The sensor modules 1000 and 1020 in FIG. 10b (e.g., the sensor module 400 in FIG. 4) may be at least partially similar to the sensor module 204 in FIG. 2a or may include other embodiments for the sensor modules 1000 and 1020. In the sensor modules 1000 and 1020 in FIG. 10b, as shown in FIG. 10a, the light emitting module 1010 and the first light receiver module 1021 may be disposed apart from each other by a first distance (d1) 1031, and the light emitting module 1010 and the second light receiver module 1022 may be disposed apart from each other by a second distance (d2) 1032 substantially identical to the first distance (d1) 1031.

With reference to FIG. 10b, the first light receiver module 1021 may receive light (e.g., beam) based on the first orientation angle 1061, and the second light receiver module 1022 may receive light based on the second orientation angle 1062. The light emitting module 1010 may emit light to an outside based on the third orientation angle 1063.

With reference to FIG. 10b, in the case that an object is located at a first position 1001-1 away from the sensor modules 1000 and 1020 by h1 1041, a first light reception amount through the first light receiver module 1021 may be substantially equal to a first threshold. For example, in the case that an object is relatively proximate to the sensor modules 1000 and 1020 at the first position 1001-1 (e.g., is moved to the first position 1001-1 from a position farther away from the sensor modules 1000 and 1020), the first light reception amount through the first light receiver module 1021 may decrease. According to an embodiment, in the case that an object is closer to the sensor modules 1000 and 1020 than the first position 1001-1 (e.g., a case in which an object moves within the first uncertainty distance (h1) 1041), a first light reception amount through the first light receiver module 1021 becomes smaller than a first threshold value, and it may be difficult for the electronic device 101 to detect the location or proximity of an object using the first light receiver module 1021. According to an embodiment, the first unidentified area 1051 based on the third orientation angle 1063 of the light emitting module 1010 and the first orientation angle 1061 of the first light receiver module 1021 may exist. For example, the first unidentified area 1051 may be formed based on the first uncertainty distance (h1) 1041.

With reference to FIG. 10b, in the case that an object is located at a second position 1001-2 away from the sensor modules 1000 and 1020 by h2 1042, a second light reception amount through the second light receiver module 1022 is substantially equal to a second threshold. For example, in the case that an object is relatively proximate to the sensor modules 1000 and 1020 at the second position 1001-2 (e.g., is moved to the second position 1001-2 from a position farther away from the sensor modules 1000 and 1020), the second light reception amount through the second light receiver module 1022 may decrease. According to an embodiment, in the case that an object is closer to the sensor modules 1000 and 1020 than the second position 1001-2 (e.g., a case in which an object moves within the second uncertainty distance (h2) 1042), a second light reception amount through the second light receiver module 1022 becomes smaller than a second threshold, and the electronic device 101 may have difficulty to detect the location or proximity of an object using the second light receiver module 1022. According to an embodiment, a second unidentified area 1052 based on the third orientation angle 1063 of the light emitting module 1010 and the second orientation angle 1062 of the second light receiver module 1022 may exist. For example, the second unidentified area 1052 may be formed based on the second uncertainty distance (h2) 1042.

With reference to FIG. 10b, based on the first uncertainty distance 1041 and the second uncertainty distance 1042, a third unidentified area 1070 corresponding to the second uncertainty distance 1042 that is relatively short may be formed. For example, the third unidentified area 1070 may be an area in which it is difficult to detect the location or proximity of an object through the first light receiver module 1021 and/or the second light receiver module 1022. The third unidentified area 1070 may be an area in which it is difficult to detect the location or proximity of an object due to low sensitivity of light received.

According to an embodiment, the electronic device 101 may identify a first light reception amount through the first light receiver module 1021 and a second light reception amount through the second light receiver module 1022, and identify the relative location of an object and the relative movement direction of an object with respect to the electronic device 101 based on the first light reception amount and the second light reception amount. For example, the electronic device 101 may detect a situation in which an object moves within an identified distance (e.g., the first uncertainty distance 1041 or the second uncertainty distance 1042) based on the first light reception amount and/or the second light reception amount. For example, the electronic device 101 may identify whether an object is in proximity to or moves away from or towards the sensor modules 1000 and 1020 with respect to the first position 1001-1 as a reference based on the first light reception amount and the second light reception amount. For another example, the electronic device 101 may identify whether an object is in proximity to or moves away from or towards the sensor modules 1000 and 1020 with respect to the second position 1001-2 as a reference based on the first light reception amount and the second light reception amount.

According to the invention, the electronic device 101 identifies a situation in which an object is relatively proximate to the electronic device 101, and changes the light emission configuration information of the light emitting module 1010 in response to the identified proximity state of the object to the electronic device 101. For example, the electronic device 101 may change light emission configuration information so that an intensity or amount of light emitted through the light emitting module 1010 increases. For example, the electronic device 101 may configure a current value applied to the light emitting module 1010 to be high. According to an embodiment, the electronic device 101 may increase a first light reception amount and a second light reception amount by changing the intensity of light emitted to be stronger, and even in the case that an object is located within an uncertainty distance (e.g., the first uncertainty distance 1041, the second uncertainty distance 1042), the electronic device 101 may at least partially identify the location or proximity of an object.

According to another embodiment, the electronic device 101 may identify a first change amount for a first light reception amount and a second change amount for a second light reception amount for a predetermined period of time, and determine a proximity of an object based on the first change amount and the second change amount. For example, the processor 120 may determine whether an object is located within an uncertainty distance (e.g., the first uncertainty distance 1041, the second uncertainty distance 1042) based on the first change amount and the second change amount.

According to another embodiment, in the electronic device 101, at least one of the first light receiver module 421 and/or the second light receiver module 422 may be implemented using an image sensor (e.g., the image sensor 430 in FIG. 4) of a camera module (e.g., the camera module 180 in FIG. 4). The electronic device 101 may use a component that performs a function of receiving light (e.g., beam) from an external environment as a light receiver module.

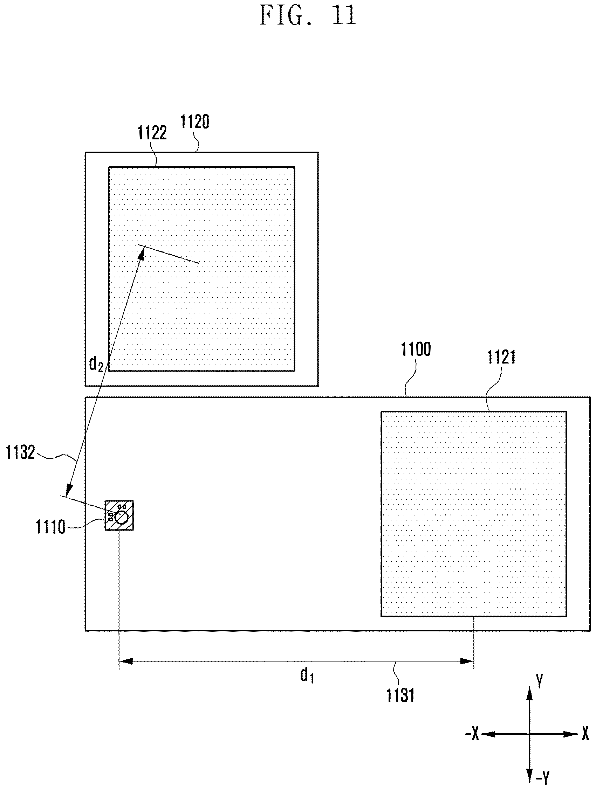

FIG. 11 is a view illustrating a first light receiver module and a second light receiver module spaced apart in different directions and by different distances from each other with respect to a light emitting module according to various embodiments of the disclosure.

The sensor modules 1100 and 1120 in FIG. 11 (e.g., the sensor module 400 in FIG. 4) may be at least partially similar to the sensor module 204 in FIG. 2a, or may further include other embodiments of the sensor module 400.

With reference to FIG. 11, the sensor modules 1100 and 1120 include one light emitting module 1110 (e.g., the light emitting module 410 in FIG. 4) and a plurality of light receiver modules (e.g., the first light receiver module 1121 (e.g., the first light receiver module 421 in FIG. 4), the second light receiver module 1122 (e.g., the second light receiver module 422 in FIG. 4)). With reference to FIG. 11, the light emitting module 1110 and the first light receiver module 1121 are illustrated as one component, and the second light receiver module 1122 is illustrated as an independent component 1120, but they are not limited thereto.

With reference to FIG. 11, the first light receiver module 1121 may be disposed apart from the light emitting module 1110 by a first distance (d1) 1131, and the second light receiver module 1122 may be disposed apart from the light emitting module 1110 by the second distance (d2) 1132. The relative locations of the first light receiver module 1121 and second light receiver module 1122 from the light emitting module 1110 may be stored in a memory.

According to an embodiment, a first orientation angle of the first light receiver module 1121 and a second orientation angle of the second light receiver module 1122 may be configured to be substantially the same, or the first distance (d1) 1131 between the light emitting module 1110 and the first light receiver module 1121 and the second distance (d2) 1132 between the light emitting module 1110 and the second light receiver module 1122 may be configured substantially the same.

According to another embodiment, a first orientation angle and a second orientation angle may not be configured to be the same, and the configuration values for the first orientation angle and the second orientation angle are not limited.

According to another embodiment, in the electronic device 101, at least one of the first light receiver module 421 and/or the second light receiver module 422 may be implemented using an image sensor (e.g., the image sensor 430 in FIG. 4) of a camera module (e.g., the camera module 180 in FIG. 4). The electronic device 101 may use a component that performs a function of receiving light (e.g., beam) from an external environment as a light receiver module.

A method of using a proximity sensor including a plurality of light receiver modules (e.g., a first light receiver module and a second light receiver module) according to various embodiments includes an operation of emitting light to an external environment through a light emitting module (e.g., the light emitting module 410 in FIG. 4), an operation of identifying a first light reception amount of light obtained through a first light receiver module (e.g., the first light receiver module 421 in FIG. 4) based on the light emitted, an operation of identifying a second light reception amount of the light obtained through a second light receiver module (e.g., the second light receiver module 422 in FIG. 4) based on the light emitted, an operation of determining a proximity of an object to an electronic device (e.g., the electronic device 101 in FIG. 4) based on the first light reception amount and the second light reception amount. The first light receiver module 421 is disposed apart from the light emitting module 410 by a first distance, and the second light receiver module 422 may be disposed apart from the light emitting module 410 by a second distance different from the first distance.

The operation of determining the proximity of the object according to an embodiment may include an operation of determining that the object is in proximity based on the first light receiver module 421 in the case that the identified first light reception amount exceeds a first threshold value configured based on the first light receiver module 421, and an operation of determining that the object is in proximity based on the second light receiver module 422 in the case that the identified second light reception amount exceeds a second threshold value configured based on the second light receiver module 422.

The method according to to the invention further includes an operation of changing light emission configuration information for the light emitting module 410 so that the intensity of light emitted is increased in response to the proximity of the object. The light emission configuration information may include at least one of an intensity of light emitted, an amount of light, a current value applied to the light emitting module 410, light emission time, and a number of light pulses emitted within a unit time.

In a method according to an embodiment, each of the light emitting module 410, the first light receiver module 421, and the second light receiver module 422 is configured to have an orientation angle, and a first orientation angle of the first light receiver module 421 and a second orientation angle of the second light receiver module 422 may be substantially the same.

An operation of determining a proximity of an object to the electronic device 101 according to an embodiment may include an operation of identifying whether the object is within a first uncertainty distance corresponding to the first light receiver module 421 or a second uncertainty distance corresponding to the second light receiver module 422, based on the first light reception amount and the second light reception amount, and an operation of determining that the object is in proximity (or proximate) to the electronic device 101 in response to the object being within the first uncertainty distance or the second uncertainty distance. The first uncertainty distance may be determined based on the first distance, the first orientation angle of the first light receiver module, and the third orientation angle of the light emitting module 410, and the second uncertainty distance may be determined based on the second distance, the second orientation angle of the second light receiver module, and the third orientation angle of the light emitting module 410.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

The embodiments of the disclosure illustrated in the present specification and drawings are only presented as specific examples to easily explain the technical content according to the embodiments of the disclosure and help understanding of the embodiments of the disclosure, and are not intended to limit the scope of the embodiments of the disclosure.

Therefore, the scope of various embodiments of the disclosure should be construed as including all changes or modified forms derived based on the embodiments disclosed herein.

## Claims

1. An electronic device (101), comprising:
a light emitting module (410);
a first light receiver module (421) disposed apart from the light emitting module (410) by a first distance;
a second light receiver module (422) disposed apart from the light emitting module (410) by a second distance;
a memory (130); and
a processor (120) operatively connected to the light emitting module (410), the first light receiver module (421), the second light receiver module (422), and the memory (130),
wherein the processor (120) is configured to:
control to emit light to an external environment through the light emitting module (410),
identify a first light reception amount of light obtained through the first light receiver module (421) based on the light emitted,
identify a second light reception amount of light obtained through the second light receiver module (422) based on the light emitted,
determine a proximity of an object to an electronic device (101) based on the first light reception amount and the second light reception amount, and
change light emission configuration information for the light emitting module (410) to increase an intensity of the light emitted through the light emitting module (410), when it is determined that the object is proximate.

2. The electronic device (101) of claim **1,** wherein the memory (130) is configured to store a first threshold value configured based on the first light receiver module (421) and a second threshold value configured based on the second light receiver module (422), and
the processor (120) is configured to:
determine that the object is proximate based on the first light receiver module (421) in case that the identified first light reception amount exceeds the first threshold value, and
determine that the object is proximate based on the second light receiver module (422) in case that the identified second light reception amount exceeds the second threshold value.

3. The electronic device (101) of claim 1, wherein the light emission configuration information includes at least one of the intensity of the light emitted, an amount of the light, a current value applied to the light emitting module, light emission time, and a number of pulses of the light emitted within a unit time.

4. The electronic device (101) of claim 1, wherein the processor (120) is configured to:
identify whether the object is within a first uncertainty distance corresponding to the first light receiver module (421) based on the first light reception amount and the second light reception amount, and
determine that the object is proximate to the electronic device in response to the object being within the first uncertainty distance,
wherein the first light receiver module (421) is configured to have a first orientation angle, the second light receiver module (422) is configured to have a second orientation angle, and the light emitting module (410) is configured to have a third orientation angle; and
wherein the first uncertainty distance is determined based on the first distance, the first orientation angle of the first light receiver module (421), and the third orientation angle of the light emitting module (410).

5. The electronic device (101) of claim 1, wherein the processor (120) is configured to:
identify whether the object is within a second uncertainty distance corresponding to the second light receiver module (422) based on the first light reception amount and the second light reception amount, and
determine that the object is proximate to the electronic device in response to the object being within the second uncertainty distance,
wherein the first light receiver module (421) is configured to have a first orientation angle, the second light receiver module (422) is configured to have a second orientation angle, and the light emitting module (410) is configured to have a third orientation angle; and
wherein the second uncertainty distance is determined based on the second distance, the second orientation angle of the second light receiver module (422), and the third orientation angle of the light emitting module (410).

6. The electronic device (101) of claim 5, wherein the first orientation angle and the second orientation angle are substantially the same, and/or wherein the first distance and the second distance are different.

7. The electronic device (101) of any previous claim, further comprising a camera module including an image sensor,
wherein the processor is configured to use the image sensor as a third light receiver module for receiving reflected light reflected by the object or to use the image sensor as one of the first light receiver module or the second light receiver module.

8. The electronic device (101) of any previous claim, wherein the processor (120) is configured to:
identify, for a predetermined period of time, a first change amount of the identified first light reception amount and a second change amount of the identified second light reception amount, and
determine the proximity of the object to the electronic device (101) based on the identified first change amount and the identified second change amount.

9. The electronic device (101) of any previous claim, further comprising a display module, (160)
wherein the processor (120) is configured to control to inactivate the display module (160) based on the proximity of the object.

10. A method of using a proximity sensor comprising a plurality of light receiver modules (421; 422), comprising:
emitting light to an external environment through a light emitting module (410);
identifying a first light reception amount of light obtained through a first light receiver module (421) based on the light emitted;
identifying a second light reception amount of light obtained through a second light receiver module (422) based on the light emitted;
determining a proximity of an object to an electronic device (101) comprising the proximity sensor based on the first light reception amount and the second light reception amount; and
changing light emission configuration information for the light emitting module (410) to increase an intensity of the light emitted through the light emitting module (410), when it is determined that the object is proximate,
wherein the first light receiver module (421) is disposed apart from the light emitting module (410) by a first distance, and the second light receiver module (422) is disposed apart from the light emitting module (410) by a second distance, .

11. The method of claim 10, wherein determining the proximity of the object includes:
determining that the object is proximate in case that the identified first light reception amount exceeds a first threshold value configured based on the first light receiver module; and
determining that the object is proximate in case that the identified second light reception amount exceeds a second threshold value configured based on the second light receiver module.

12. The method of claim 10,
wherein the light emission configuration information includes at least one of the intensity of the light emitted, an amount of the light, a current value applied to the light emitting module, light emission time, and a number of pulses emitted within a unit time.

13. The method of claim 10, wherein determining the proximity of the object includes:
identifying, based on the first light reception amount and the second light reception amount, whether the object is within a first uncertainty distance corresponding to the first light receiver module (421) or a second uncertainty distance corresponding to the second light receiver module (422); and
determining that the object is proximate to the electronic device (101) in response to the object being within the first uncertainty distance or the second uncertainty distance,
wherein the first light receiver module (421) is configured to have a first orientation angle, the second light receiver module (422) is configured to have a second orientation angle, and the light emitting module (410) is configured to have a third orientation angle,
wherein the first uncertainty distance is determined based on the first distance, the first orientation angle of the first light receiver module (421), and the third orientation angle of the light emitting module (410), and
wherein the second uncertainty distance is determined based on the second distance, the second orientation angle of the second light receiver module (422), and the third orientation angle of the light emitting module (410).

14. The method of claim 10, wherein the electronic device (101) comprises a display module (160), and
wherein the method further comprises controlling to inactivate the display module (160) based on the proximity of the object.

## Patentansprüche

1. Elektronische Vorrichtung (101), umfassend:
ein lichtemittierendes Modul (410);
ein erstes Lichtempfängermodul (421), das um eine erste Entfernung von dem lichtemittierenden Modul (410) beabstandet angeordnet ist;
ein zweites Lichtempfängermodul (422), das um eine zweite Entfernung von dem lichtemittierenden Modul (410) entfernt angeordnet ist;
einen Speicher (130); und
einen Prozessor (120), der in Wirkverbindung mit dem lichtemittierenden Modul (410), dem ersten Lichtempfängermodul (421), dem zweiten Lichtempfängermodul (422) und dem Speicher (130) steht,
wobei der Prozessor (120) zu Folgendem konfiguriert ist:
Steuern eines Emittierens von Licht durch das lichtemittierende Modul (410) an eine externe Umgebung,
Identifizieren einer ersten Lichtempfangsmenge von Licht, das durch das erste Lichtempfängermodul (421) erhalten wird, basierend auf dem emittierten Licht,
Identifizieren einer zweiten Lichtempfangsmenge von Licht, das durch das zweite Lichtempfängermodul (422) erhalten wird, basierend auf dem emittierten Licht,
Bestimmen einer Nähe eines Objekts zu einer elektronischen Vorrichtung (101) basierend auf der ersten Lichtempfangsmenge und der zweiten Lichtempfangsmenge und
Ändern von Lichtemissionskonfigurationsinformationen für das lichtemittierende Modul (410), um eine Intensität des durch das lichtemittierende Modul (410) emittierten Lichts zu erhöhen, wenn bestimmt wird, dass sich das Objekt in der Nähe befindet.

2. Elektronische Vorrichtung (101) nach Anspruch 1, wobei der Speicher (130) dazu konfiguriert ist, einen ersten Schwellenwert, der basierend auf dem ersten Lichtempfängermoduls (421) konfiguriert ist, und einen zweiten Schwellenwert zu speichern, der basierend auf dem zweiten Lichtempfängermodul (422) konfiguriert ist, und
wobei der Prozessor (120) zu Folgendem konfiguriert ist:
Bestimmen, dass sich das Objekt in der Nähe befindet, basierend auf dem ersten Lichtempfängermodul (421), für den Fall, dass die identifizierte erste Lichtempfangsmenge den ersten Schwellenwert überschreitet, und
Bestimmen, dass sich das Objekt in der Nähe befindet, basierend auf dem zweiten Lichtempfängermodul (422), für den Fall, dass die identifizierte zweite Lichtempfangsmenge den zweiten Schwellenwert überschreitet.

3. Elektronische Vorrichtung (101) nach Anspruch 1, wobei die Lichtemissionskonfigurationsinformationen mindestens eines von der Intensität des emittierten Lichts, einer Menge des Lichts, einem an dem lichtemittierenden Modul angelegten Stromwert, einer Lichtemissionszeit und einer Anzahl von Impulsen des Lichts, die innerhalb einer Zeiteinheit emittiert werden, beinhalten.

4. Elektronische Vorrichtung (101) nach Anspruch 1, wobei der Prozessor (120) zu Folgendem konfiguriert ist:
Identifizieren, ob sich das Objekt innerhalb einer ersten Unsicherheitsentfernung befindet, die dem ersten Lichtempfängermodul (421) entspricht, basierend auf der ersten Lichtempfangsmenge und der zweiten Lichtempfangsmenge und
Bestimmen, dass sich das Objekt in der Nähe der elektronischen Vorrichtung befindet, als Reaktion darauf, dass sich das Objekt innerhalb der ersten Unsicherheitsentfernung befindet,
wobei das erste Lichtempfängermodul (421) dazu konfiguriert ist, einen ersten Ausrichtungswinkel aufzuweisen, das zweite Lichtempfängermodul (422) dazu konfiguriert ist, einen zweiten Ausrichtungswinkel aufzuweisen, und das lichtemittierende Modul (410) dazu konfiguriert ist, einen dritten Ausrichtungswinkel aufzuweisen; und
wobei die erste Unsicherheitsentfernung basierend auf der ersten Entfernung, dem ersten Ausrichtungswinkel des ersten Lichtempfängermoduls (421) und dem dritten Ausrichtungswinkel des lichtemittierenden Moduls (410) bestimmt wird.

5. Elektronische Vorrichtung (101) nach Anspruch 1, wobei der Prozessor (120) zu Folgendem konfiguriert ist:
Identifizieren, ob sich das Objekt innerhalb einer zweiten Unsicherheitsentfernung befindet, die dem zweiten Lichtempfängermodul (422) entspricht, basierend auf der ersten Lichtempfangsmenge und der zweiten Lichtempfangsmenge und
Bestimmen, dass sich das Objekt in der Nähe der elektronischen Vorrichtung befindet, als Reaktion darauf, dass sich das Objekt innerhalb der zweiten Unsicherheitsentfernung befindet,
wobei das erste Lichtempfängermodul (421) dazu konfiguriert ist, einen ersten Ausrichtungswinkel aufzuweisen, das zweite Lichtempfängermodul (422) dazu konfiguriert ist, einen zweiten Ausrichtungswinkel aufzuweisen, und das lichtemittierende Modul (410) dazu konfiguriert ist, einen dritten Ausrichtungswinkel aufzuweisen; und
wobei die zweite Unsicherheitsentfernung basierend auf der zweiten Entfernung, dem zweiten Ausrichtungswinkel des zweiten Lichtempfängermoduls (422) und dem dritten Ausrichtungswinkel des lichtemittierenden Moduls (410) bestimmt wird.

6. Elektronische Vorrichtung (101) nach Anspruch 5, wobei der erste Ausrichtungswinkel und der zweite Ausrichtungswinkel im Wesentlichen gleich sind und/oder wobei sich die erste Entfernung und die zweite Entfernung unterscheiden.

7. Elektronische Vorrichtung (101) nach einem vorhergehenden Anspruch, ferner umfassend ein Kameramodul, das einen Bildsensor beinhaltet,
wobei der Prozessor dazu konfiguriert ist, den Bildsensor als ein drittes Lichtempfängermodul zu verwenden, um reflektiertes Licht zu empfangen, das durch das Objekt reflektiert wird, oder um den Bildsensor als eines von dem ersten Lichtempfängermodul oder dem zweiten Lichtempfängermodul zu verwenden.

8. Elektronische Vorrichtung (101) nach einem der vorhergehenden Ansprüche, wobei der Prozessor (120) zu Folgendem konfiguriert ist:
Identifizieren einer ersten Änderungsmenge der identifizierten ersten Lichtempfangsmenge und einer zweiten Änderungsmenge der identifizierten zweiten Lichtempfangsmenge für einen vorbestimmten Zeitraum und
Bestimmen der Nähe des Objekts zu der elektronischen Vorrichtung (101) basierend auf der identifizierten ersten Änderungsmenge und der identifizierten zweiten Änderungsmenge.

9. Elektronische Vorrichtung (101) nach einem vorhergehenden Anspruch, ferner umfassend ein Anzeigemodul (160),
wobei der Prozessor (120) dazu konfiguriert ist, ein Inaktivieren des Anzeigemoduls (160) basierend auf der Nähe des Objekts zu steuern.

10. Verfahren zum Verwenden eines Näherungssensors, der mehrere Lichtempfängermodulen (421; 422) umfasst, umfassend:
Emittieren von Licht an eine externe Umgebung durch ein lichtemittierendes Modul (410);
Identifizieren einer ersten Lichtempfangsmenge von Licht, das durch ein erstes Lichtempfängermodul (421) erhalten wird, basierend auf dem emittierten Licht;
Identifizieren einer zweiten Lichtempfangsmenge von Licht, das durch ein zweites Lichtempfängermodul (422) erhalten wird, basierend auf dem emittierten Licht;
Bestimmen einer Nähe eines Objekts zu einer elektronischen Vorrichtung (101), die den Näherungssensor umfasst, basierend auf der ersten Lichtempfangsmenge und der zweiten Lichtempfangsmenge; und
Ändern von Lichtemissionskonfigurationsinformationen für das lichtemittierende Modul (410), um eine Intensität des durch das lichtemittierende Modul (410) emittierten Lichts zu erhöhen, wenn bestimmt wird, dass sich das Objekt in der Nähe befindet,
wobei das erste Lichtempfängermodul (421) um eine erste Entfernung von dem lichtemittierenden Modul (410) beabstandet angeordnet ist und das zweite Lichtempfängermodul (422) um eine zweite Entfernung von dem lichtemittierenden Modul (410) beabstandet angeordnet ist.

11. Verfahren nach Anspruch 10, wobei das Bestimmen der Nähe des Objekts Folgendes beinhaltet:
Bestimmen, dass sich das Objekt in der Nähe befindet, für den Fall, dass die identifizierte erste Lichtempfangsmenge einen ersten Schwellenwert überschreitet, der basierend auf dem ersten Lichtempfängermodul konfiguriert ist; und
Bestimmen, dass sich das Objekt in der Nähe befindet, für den Fall, dass die identifizierte zweite Lichtempfangsmenge einen zweiten Schwellenwert überschreitet, der basierend auf dem zweiten Lichtempfängermodul konfiguriert ist.

12. Verfahren nach Anspruch 10,
wobei die Lichtemissionskonfigurationsinformationen mindestens eines von der Intensität des emittierten Lichts, einer Menge des Lichts, einem an dem Lichtemissionsmodul angelegten Stromwert, einer Lichtemissionszeit und einer Anzahl von Impulsen, die innerhalb einer Zeiteinheit emittiert werden, beinhalten.

13. Verfahren nach Anspruch 10, wobei das Bestimmen der Nähe des Objekts Folgendes beinhaltet:
Identifizieren, ob sich das Objekt innerhalb einer ersten Unsicherheitsentfernung, die dem ersten Lichtempfängermodul (421) entspricht, oder einer zweiten Unsicherheitsentfernung, die dem zweiten Lichtempfängermodul (422) entspricht, befindet, basierend auf der ersten Lichtempfangsmenge und der zweiten Lichtempfangsmenge; und
Bestimmen, dass sich das Objekt in der Nähe der elektronischen Vorrichtung (101) befindet, als Reaktion darauf, dass sich das Objekt innerhalb der ersten Unsicherheitsentfernung oder der zweiten Unsicherheitsentfernung befindet,
wobei das erste Lichtempfängermodul (421) dazu konfiguriert ist, einen ersten Ausrichtungswinkel aufzuweisen, das zweite Lichtempfängermodul (422) dazu konfiguriert ist, einen zweiten Ausrichtungswinkel aufzuweisen, und das lichtemittierende Modul (410) dazu konfiguriert ist, einen dritten Ausrichtungswinkel aufzuweisen,
wobei die erste Unsicherheitsentfernung basierend auf der ersten Entfernung, dem ersten Ausrichtungswinkel des ersten Lichtempfängermoduls (421) und dem dritten Ausrichtungswinkel des lichtemittierenden Moduls (410) bestimmt wird und
wobei die zweite Unsicherheitsentfernung basierend auf der zweiten Entfernung, dem zweiten Ausrichtungswinkel des zweiten Lichtempfängermoduls (422) und dem dritten Ausrichtungswinkel des lichtemittierenden Moduls (410) bestimmt wird.

14. Verfahren nach Anspruch 10, wobei die elektronische Vorrichtung (101) ein Anzeigemodul (160) umfasst und
wobei das Verfahren ferner Steuern eines Inaktivierens des Anzeigemoduls (160) basierend auf der Nähe des Objekts umfasst.

## Revendications

1. Dispositif électronique (101), comprenant :
un module électroluminescent (410) ;
un premier module récepteur de lumière (421) disposé à une première distance du module électroluminescent (410) ;
un deuxième module récepteur de lumière (422) disposé à une second distance du module électroluminescent (410) ;
une mémoire (130) ; et
un processeur (120) connecté fonctionnellement au module électroluminescent (410), au premier module récepteur de lumière (421), au deuxième module récepteur de lumière (422) et à la mémoire (130), ledit processeur (120) étant configuré pour :
commander pour émettre de la lumière vers un environnement externe par le module électroluminescent (410), identifier une première quantité de réception de lumière de la lumière obtenue par le premier module récepteur de lumière (421) sur la base de la lumière émise, identifier une seconde quantité de réception de lumière de la lumière obtenue par le deuxième module récepteur de lumière (422) sur la base de la lumière émise, déterminer une proximité d'un objet par rapport à un dispositif électronique (101) sur la base de la première quantité de réception de lumière et de la seconde quantité de réception de lumière, et
changer les informations de configuration d'émission de lumière pour le module électroluminescent (410) afin d'augmenter une intensité de la lumière émise par le module électroluminescent (410), lorsque l'objet est déterminée comme étant proche.

2. Dispositif électronique (101) de la revendication 1, ladite mémoire (130) étant configurée pour stocker une première valeur seuil configurée sur la base du premier module récepteur de lumière (421) et une seconde valeur seuil configurée sur la base du deuxième module récepteur de lumière (422), et
ledit processeur (120) étant configuré pour :
déterminer que l'objet est proche sur la base du premier module récepteur de lumière (421) dans le cas où la première quantité de réception de lumière identifiée dépasse la première valeur seuil, et
déterminer que l'objet est proche sur la base du deuxième module récepteur de lumière (422) dans le cas où la seconde quantité de réception de lumière identifiée dépasse la seconde valeur seuil.

3. Dispositif électronique (101) de la revendication 1, lesdites informations de configuration d'émission de lumière comprenant au moins l'un de l'intensité de la lumière émise, d'une quantité de la lumière, d'une valeur de courant appliquée au module électroluminescent, d'un temps d'émission de lumière et d'un nombre d'impulsions de la lumière émise dans un temps unitaire.

4. Dispositif électronique (101) de la revendication 1, ledit processeur (120) étant configuré pour : identifier si l'objet se trouve dans les limites d'une première distance d'incertitude correspondant au premier module récepteur de lumière (421) sur la base de la première quantité de réception de lumière et de la seconde quantité de réception de lumière, et
déterminer que l'objet est proche du dispositif électronique en réponse à l'objet se trouvant dans les limites de la première distance d'incertitude,
ledit premier module récepteur de lumière (421) étant configuré pour posséder un premier angle d'orientation, ledit deuxième module récepteur de lumière (422) étant configuré pour posséder un deuxième angle d'orientation, et ledit module électroluminescent (410) étant configuré pour posséder un troisième angle d'orientation ; et
ladite première distance d'incertitude étant déterminée sur la base de la première distance, du premier angle d'orientation du premier module récepteur de lumière (421) et du troisième angle d'orientation du module électroluminescent (410).

5. Dispositif électronique (101) de la revendication 1, ledit processeur (120) étant configuré pour : identifier si l'objet se trouve dans les limites d'une seconde distance d'incertitude correspondant au deuxième module récepteur de lumière (422) sur la base de la première quantité de réception de lumière et de la seconde quantité de réception de lumière, et
déterminer que l'objet est proche du dispositif électronique en réponse à l'objet se trouvant dans les limites de la seconde distance d'incertitude,
ledit premier module récepteur de lumière (421) étant configuré pour posséder un premier angle d'orientation, ledit deuxième module récepteur de lumière (422) étant configuré pour posséder un deuxième angle d'orientation, et ledit module électroluminescent (410) étant configuré pour posséder un troisième angle d'orientation ; et
ladite seconde distance d'incertitude étant déterminée sur la base de la seconde distance, du deuxième angle d'orientation du deuxième module récepteur de lumière (422) et du troisième angle d'orientation du module électroluminescent (410).

6. Dispositif électronique (101) de la revendication 5, ledit premier angle d'orientation et ledit deuxième angle d'orientation étant sensiblement identiques, et/ou ladite première distance et ladite seconde distance étant différentes.

7. Dispositif électronique (101) d'une quelconque revendication précédente, comprenant en outre un module de caméra comprenant un capteur d'image,
ledit processeur étant configuré pour utiliser le capteur d'image en tant que troisième module récepteur de lumière pour recevoir la lumière réfléchie qui est réfléchie par l'objet ou pour utiliser le capteur d'image en tant que l'un du premier module récepteur de lumière ou du deuxième module récepteur de lumière.

8. Dispositif électronique (101) d'une quelconque revendication précédente, ledit processeur (120) étant configuré pour :
identifier, pendant une période de temps prédéfinie, une première quantité de changement de la première quantité de réception de lumière identifiée et une seconde quantité de changement de la seconde quantité de réception de lumière identifiée, et
déterminer la proximité de l'objet par rapport au dispositif électronique (101) sur la base de la première quantité de changement identifiée et de la seconde quantité de changement identifiée.

9. Dispositif électronique (101) d'une quelconque revendication précédente, comprenant en outre un module d'affichage (160),
ledit processeur (120) étant configuré pour commander pour désactiver le module d'affichage (160) sur la base de la proximité de l'objet.

10. Procédé d'utilisation d'un capteur de proximité comprenant une pluralité de modules récepteurs de lumière (421 ; 422), comprenant :
l'émission de lumière vers un environnement externe par un module électroluminescent (410) ;
l'identification d'une première quantité de réception de lumière de la lumière obtenue par un premier module récepteur de lumière (421) sur la base de la lumière émise ;
l'identification d'une seconde quantité de réception de lumière de la lumière obtenue par un deuxième module récepteur de lumière (422) sur la base de la lumière émise ;
la détermination d'une proximité d'un objet par rapport à un dispositif électronique (101) comprenant le capteur de proximité sur la base de la première quantité de réception de lumière et de la seconde quantité de réception de lumière ; et
le changement d'informations de configuration d'émission de lumière pour le module électroluminescent (410) afin d'augmenter une intensité de la lumière émise par le module électroluminescent (410), lorsque l'objet est déterminée comme étant proche,
ledit premier module récepteur de lumière (421) étant disposé à une première distance du module électroluminescent (410), et ledit deuxième module récepteur de lumière (422) étant disposé à une seconde distance du module électroluminescent (410).

11. Procédé de la revendication 10, ladite détermination de la proximité de l'objet comprenant : la détermination que l'objet est proche dans le cas où la première quantité de réception de lumière identifiée dépasse une première valeur seuil configurée sur la base du premier module récepteur de lumière ; et la détermination que l'objet est proche dans le cas où la seconde quantité de réception de lumière identifiée dépasse une seconde valeur seuil configurée sur la base du deuxième module récepteur de lumière.

12. Procédé de la revendication 10, lesdites informations de configuration d'émission de lumière comprenant au moins l'un de l'intensité de la lumière émise, d'une quantité de la lumière, d'une valeur de courant appliquée au module électroluminescent, d'un temps d'émission de lumière et d'un nombre d'impulsions émises dans un temps unitaire.

13. Procédé de la revendication 10, ladite détermination de la proximité de l'objet comprenant :
l'identification, sur la base de la première quantité de réception de lumière et de la seconde quantité de réception de lumière, pour savoir si l'objet se trouve dans les limites d'une première distance d'incertitude correspondant au premier module récepteur de lumière (421) ou d'une seconde distance d'incertitude correspondant au deuxième module récepteur de lumière (422) ; et
déterminer que l'objet est proche du dispositif électronique (101) en réponse à l'objet se trouvant dans les limites de la première distance d'incertitude ou de la seconde distance d'incertitude, ledit premier module récepteur de lumière (421) étant configuré pour posséder un premier angle d'orientation, ledit deuxième module récepteur de lumière (422) étant configuré pour posséder un deuxième angle d'orientation, et ledit module électroluminescent (410) étant configuré pour posséder un troisième angle d'orientation,
ladite première distance d'incertitude étant déterminée sur la base de la première distance, du premier angle d'orientation du premier module récepteur de lumière (421) et du troisième angle d'orientation du module électroluminescent (410), et
ladite seconde distance d'incertitude étant déterminée sur la base de la seconde distance, du deuxième angle d'orientation du deuxième module récepteur de lumière (422) et du troisième angle d'orientation du module électroluminescent (410).

14. Procédé de la revendication 10, ledit dispositif électronique (101) comprenant un module d'affichage (160), et ledit procédé comprenant en outre la commande pour désactiver le module d'affichage (160) sur la base de la proximité de l'objet.
